## Europäisches Patentamt

## European Patent Office

## Office européen des brevets

(19)

(11) Veröffentlichungsnummer: **0 211 243**
**B1**

(12) **EUROPÄISCHE PATENTSCHRIFT**

(45) Veröffentlichungstag der Patentschrift:
31.01.90

(21) Anmeldenummer: 86109116.3

(22) Anmeldetag: 03.07.86

(51) Int. Cl.⁴: **F 16 C 29/06**

(54) Wälzlager für Linearbewegungen.

(30) Priorität: 02.08.85 DE 3527886
19.06.86 DE 3620571

(43) Veröffentlichungstag der Anmeldung:
25.02.87 Patentblatt 87/9

(45) Bekanntmachung des Hinweises auf die Patenterteilung:
31.01.90 Patentblatt 90/5

(84) Benannte Vertragsstaaten:
BE CH DE FR GB IT LI NL SE

(56) Entgegenhaltungen:
EP-A- 0 138 360
EP-A- 0 197 150
DE-A- 3 005 579
DE-A- 3 227 902

(73) Patentinhaber: Deutsche Star GmbH,
Ernst-Sachs-Strasse 90, D-8720 Schweinfurt 1 (DE)

(72) Erfinder: Blaurock, Günter, Wielandstrasse 7,
D-8721 Niederwerrn (DE)

(74) Vertreter: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)

## Beschreibung

Die Erfindung bezieht sich auf ein Wälzlager für Linearbewegungen, umfassend einen auf einer Schiene in deren Achsrichtung verschiebbar geführten Lagerhauptkörper mit zwei in Achsrichtung der Schiene beabstandeten, im wesentlichen achsnormalen Endflächen und mindestens einem Paar von Wälzkörperumläufen, wobei jeder Wälzkörperumlauf des Paars eine geradlinige, lastübertragende Wälzkörperreihe in Eingriff mit einer achsparallelen, lastaufnehmenden Laufbahn des Lagerhauptkörpers und mit einer achsparallelen, lastaufnehmenden Laufbahn der Schiene, eine rücklaufende Wälzkörperreihe und zwei Bogenwälzkörperreihen aufweist, wobei weiter die rücklaufenden Wälzkörperreihen durch annähernd achsparallele Rücklaufkanäle in dem Lagerhauptkörper geführt sind, wobei weiter an den Endflächen Endplatten angebracht sind, welche Umlenkflächen für die Bogenwälzkörperreihen aufweisen, wobei weiter die Endplatten mit in Flucht zueinander liegenden und an ihren Enden zusammenstoßenden achsparallelen Haltestegen ausgeführt sind und wobei diese Haltestege die lastübertragenden Wälzkörperreihen in Eingriffsstellung zu den lastaufnehmenden Laufbahnen des Lagerhauptkörpers halten.

Derartige Wälzlager mit Kunststoffkäfigen (Endplatten + Halbstege) sind bekannt. In der DE-A-3 227 902 und der DE-A-3 148 331 ist eine Linearführung beschrieben, deren senkrecht zur Axialebene zweigeteilter Kunststoffkäfig je aus einer Endplatte mit eingearbeiteten Kugelrückführungsausnehmungen und fünf angespritzten Haltestegen besteht. Der Nachteil ist die hohe Anzahl von Haltestegen für die Führung der vier belasteten Kugelreihen, die ein kompliziertes und damit unwirtschaftliches Spritzgießwerkzeug erfordern und einen größeren Materialverbrauch nach sich ziehen. Zudem sind für die Kugelumlenkung am Austritt bzw. Eintritt in die belasteten Kugellaufbahnen größere Verrundungen oder Abschrägungen am Lagerhauptkörper angebracht, was eine erhebliche spanende Nachbearbeitung bedingt. Geschieht dies nicht, dann kommt es zu einer schlagartigen Be- und Entlastung der tragenden Kugeln mit einer enormen Kantenpressung am Übergang zur Endplatte. Damit ist der Ablauf beeinträchtigt und die Lebensdauer erheblich herabgesetzt. Trotz Verrundungen wird bei der Ausführung nach der DE-A-3 227 902 der Ablauf nicht zufriedenstellend sein, da der innere und äußere Umlenkradius keine konzentrischen Halbkreise bilden, was zu Unstetigkeiten und unterschiedlichem Kugelspiel in der Umlenkung führt.

Bei der DE-A-3 148 331 ist dieser Mangel weitgehend beseitigt. Hier bleibt jedoch das Problem, den äußeren Radius beim Übergang zur Rücklaufbohrung im Lagerhauptkörper fortzusetzen. Dies ist fertigungstechnisch, wenn überhaupt, nur sehr schwer machbar. Um eine Schmierung des Linearlagers zu ermöglichen, ist ebenfalls eine spanende Nachbearbeitung durch Bohren eines Schmierlochs und mehrerer Verbindungskanäle in dem Lagerhauptkörper notwendig (DE-A-3 227 902). Dies verursacht Mehrkosten und einen erhöhten Zeitaufwand in der Herstellung des Lagerelements. Eine Abdichtung ist nicht vorgesehen. Dadurch kann das Schmiermittel sehr leicht austreten und Schmutz in das Lagerelement eindringen, so daß die Lebensdauer verringert wird.

Bei einer anderen Linearlagerausführung in der DE-A-3 224 282 kommen zu vier angespritzten Käfighaltestegen für zwei Kugelreihen drei zusätzliche, im Lagerhauptkörper zu verschraubende Leisten hinzu, was eine weitere Verkomplizierung der Lagereinheit ergibt. Im übrigen gilt hier das für die DE-A-3 227 902 gesagte.

Aus der DE-A-3 303 831 ist ein Kugelschiebelager bekannt mit zwei Kunststoffkäfighälften, wobei ebenfalls für die Umlenkung eine Nachbearbeitung am Lagerhauptkörper sowie ein kompliziertes Spritzgießwerkzeug erforderlich sind und keine Nachschmierung und Abdichtung ermöglicht sind. Die Tragfähigkeit dieses Lagerelements ist zudem beschränkt, da die Welle nicht durchgehend unterstützt werden kann. Weiterhin liegt dieser Ausführung kein direkt über eine ebene Auflagefläche verschraubbarer Lagerblock zugrunde, sondern ein hülsenähnliches Element, das von einer Gehäusebohrung aufgenommen wird.

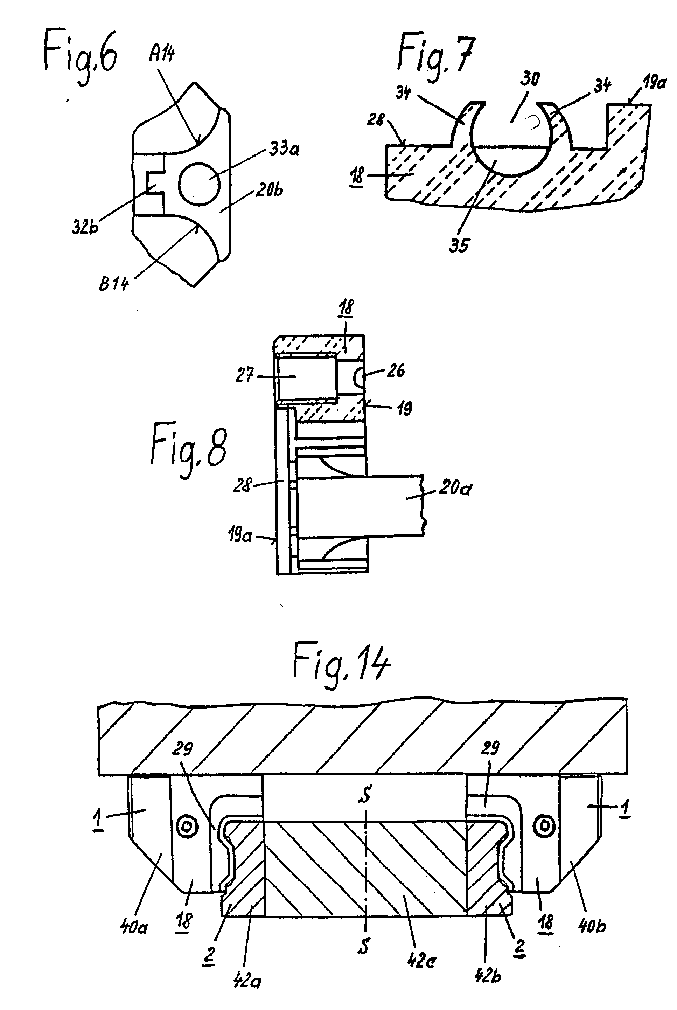

In der französischen Publikation FR-A-2 523 669 ist für eine offene Schienenführung mit zwei Kugelreihen ein Käfig beschrieben. Er kann aus Metall oder Kunststoff gefertigt sein und weist Merkmale wie oben beschriebene Käfige auf. Endplatte und Kugelführung für beide Laufbahnen der beiden Käfighälften sind nach Fig. 4 und 5 einstückig. Die Kugelumlenkung erfolgt in der Endplatte. Eine Nachbearbeitung, um am Kugeleinlauf bzw. -auslauf einen guten Übergang und damit einen geringen Verschleiß und ruhigen Ablauf zu erreichen, ist notwendig, wobei, wie bei der DE-A-3 227 902 und der DE-A-3 148 331 bereits beschrieben, trotzdem kein zufriedenstellender Ablauf erreichbar ist bzw. die Herstellung des Endbereichs «äußerer Umlenkradius» in Verbindung mit der Rücklaufbohrung erhebliche Probleme bringt. Nachschmiermöglichkeit und Abdichtungen fehlen auch hier.

Es sind jedoch auch Lagerelemente für Längsführungen bekannt, bei denen eine größere Nachbearbeitung der belasteten Laufbahnenden des Lagerhauptkörpers nicht mehr erforderlich ist und trotzdem ein guter Kugelübergang und ruhiger Kugellauf erreicht wird. In den DE-A-en 3 005 579, 1 425 966, 3 313 129, 3 304 895 und 3 313 575 wird dies erreicht durch halbzylindrische Umlenkstücke, deren Radius dem halben Kugeldurchmesser entspricht. Die Umlenkstücke werden zwischen Endplatte und Endfläche des Lagerhauptkörpers in Ausnehmungen eingelegt und führen damit die Kugeln von innen. Die äußere Kugelführung wird von den bekannten U-förmigen Ausnehmungen in der Seitenplatte übernommen. Alle diese Lösungen haben in ihren Ausführungsformen eines gemeinsam: Endplatte mit Kugelumlenkung und Haltestege werden getrennt hergestellt und montiert. Damit erhöht sich die Zahl der Teile und somit der Fertigungs- und Montageaufwand sowie die Anzahl von Stoßübergängen und Fehlerquellen.

Als nächst kommender Stand der Technik für die Vertragsstaaten BE, FR, IT, NL, LI und CH wird der Gegenstand der DE-A-3 227 902 angesehen.

Von diesem Stand der Technik ausgehend liegt der Erfindung die Aufgabe zugrunde, ein Wälzlager anzugeben, welches leicht gefertigt werden kann, wobei die Forderung nach leichter Fertigung, insbesondere bezüglich des Lagerhauptkörpers und des aus Endplatten und Haltestegen bestehenden Käfigs besteht.

Zur Lösung dieser Aufgabe wird erfindungsgemäß vorgeschlagen, daß die beiden lastübertragenden Wälzkörperreihen beider Wälzkörperumläufe des Paars durch eine einzige, ihnen gemeinsame Gruppe von zwei miteinander fluchtenden, jeweils einer Endplatte zugehörigen und zwischen den lastübertragenden Kugelreihen angeordneten Haltestegen in Eingriffsstellung zu der jeweiligen Laufbahn des Lagerhauptkörpers gesichert sind.

Bei der erfindungsgemäßen Ausführungsform lassen sich die aus jeweils einer Endplatte und einem Haltesteg für jeweils zwei Wälzkörperumläufe bestehenden Käfigteile auf einfachste Weise durch Gießen oder Spritzen insbesondere aus Kunststoff herstellen, wobei spanabhebende Bearbeitung entweder ganz vermieden oder auf ein Minimum reduziert ist.

Für die Vertragsstaaten DE, GB und SE ist weiterhin die nicht vorveröffentlichte WO-A-8 602 417 zu berücksichtigen, welche gegenüber der dem Anspruch 1 des vorliegenden Patents zukommenden Priorität vom 2.8.1985 ein älteres Prioritätsdatum, nämlich vom 11.10.1984, besitzt, aber nicht vorveröffentlicht ist. Diese WO-A-8 602 417 offenbart bereits ein Wälzlager für Linearbewegungen, umfassend einen auf einer Schiene in deren Achsrichtung verschiebbar geführten Lagerhauptkörper mit zwei in Achsrichtung der Schiene beabstandeten, im wesentlichen achsnormalen Endflächen und mindestens einem Paar von Wälzkörperumläufen, wobei jeder Wälzkörperumlauf des Paars eine geradlinige, lastübertragende Wälzkörperreihe in Eingriff mit einer achsparallelen, lastaufnehmenden Laufbahn des Lagerhauptkörpers und mit einer achsparallelen, lastaufnehmenden Laufbahn der Schiene, eine rücklaufende Wälzkörperreihe und zwei Bogenwälzkörperreihen aufweist, wobei weiter die rücklaufenden Wälzkörperreihen durch annähernd achsparallele Rücklaufkanäle des Lagerhauptkörpers geführt sind, wobei weiter an den Endflächen Endplatten angebracht sind, in welchen Umlenkflächen für die Bogenwälzkörperreihen vorgesehen sind, wobei weiter die Endplatten mit achsparallelen Haltestegen ausgeführt sind, wobei weiter diese Haltestege die lastübertragenden Wälzkörperreihen in Eingriffstellung zu den lastaufnehmenden Laufbahnen des Lagerhauptkörpers halten, und wobei die beiden lastübertragenden Wälzkörperreihen beider Wälzkörperumläufe des Paars durch einen einzigen, ihnen gemeinsamen, den beiden Endplatten zugehörigen und zwischen den lastübertragenden Wälzkörperreihen angeordneten Haltesteg in Eingriffsstellung zu der jeweiligen Laufbahn des Lagerhauptkörpers gehalten sind.

Um den Wälzkörpern am Lagerhauptkörper bereits vor dem Zusammenbau des Lagerhauptkörpers mit der Schiene einen guten Halt zu geben, wird vorgeschlagen, daß die Haltestege Haltebahnen für die lastübertragenden Wälzkörperreihen aufweisen.

Um die Haltestege in ihrer Lage bezüglich des Lagerhauptkörpers eindeutig und unverlagerbar festzulegen, wird vorgeschlagen, daß die Haltestege durch eine Nut-Federverbindung, insbesondere mit Schwalbenschwanzprofil, oder eine ähnliche Verbindung an dem Lagerhauptkörper abgestützt sind.

Um die Haltestege, die einander gegenüberliegenden Endplatten angehören, an den Stoßstellen miteinander zu verbinden und die exakte Profilflucht der Haltestege sicherzustellen, wird vorgesehen, daß die einander zugekehrten Enden miteinander fluchtender Haltestege durch Steckverbindungen oder dergleichen miteinander verbunden sind.

Um in dem Lagerhauptkörper mit ausschließlich geradlinigen Laufbahnen und Rücklaufkanälen auszukommen, die sich leicht herstellen lassen, wird vorgeschlagen, daß die Endflächen des Lagerhauptkörpers an der Stelle des Übergangs von den geradlinigen, lastübertragenden Wälzkörperreihen zu den Bogenwälzkörperreihen angeordnet sind. Ferner empfiehlt es sich, daß eine Bogenwälzkörperreihe durch eine in einer Anlagefläche der Endplatte versenkte, äußere, d. h. von dem Lagerhauptkörper fernere Umlenkfläche und eine innere, d. h. dem Lagerhauptkörper nähere Umlenkfläche geführt ist, wobei die innere Umlenkfläche an mindestens einem Umlenkstück gebildet ist, welches in einer Umlenkstückaufnahme in der Anlagefläche der Endplatte aufgenommen ist.

Eine optimale Laufruhe der Wälzkörperumläufe ergibt sich dann, wenn die Bogenwälzkörperreihen einem Halbkreis folgen. Dies bedeutet, daß dann auch die äußeren und inneren Umlenkflächen konzentrischen kreisförmigen Verlauf haben müssen.

Für eine einfache und kostengünstige Fertigung ist es bei Parallelität der Wälzkörperumläufe eines Paars vorteilhaft, wenn die benachbart liegenden Bogenwälzkörperreihen der Wälzkörperumläufe des Paars ein gemeinsames Umlenkstück zugeordnet erhalten, welches von einer gemeinsamen Umlenkstückaufnahme aufgenommen ist.

Eine zuverlässige Schmierung des Wälzlagers, die gleichwohl besonders geringe Zusatzmaßnahmen bei der Herstellung erfordert, läßt sich dadurch gewinnen, daß in der Anlagefläche mindestens einer Endplatte eine Schmiermittelversorgungsrinne vorgesehen ist, welche an einen Schmiermittelzufluß der Endplatte angeschlossen ist, zu der Umlenkstückaufnahme führt und durch ein Schmiermittelverteilungssystem innerhalb jeweils einer Umlenkstückaufnahme einen bzw. zwei Wälzkörperumläufe mit Schmiermittel versorgt, wobei von einer Schmiermittelversorgungsrinne aus vorzugsweise alle Wälzkörperumläufe mit Schmiermittel versorgt werden. Wenn davon ausgegangen wird, daß die Endplatte aus Kunststoff gegossen oder gespritzt wird, so läßt sich die Schmiermittelversorgungsrinne bei dem Gieß- bzw. Spritzvorgang herstellen, ohne daß sie einer besonderen spanabhebenden Bearbeitung bedarf. Dabei kann das Schmiermittelverteilungssystem innerhalb der Umlenkstückaufnahme von einer Längsverteilerrinne in einer von der inneren Umlenkfläche abgelegenen Rückenfläche des Umlenkstücks und einer Querbohrung gebildet sein, welche diese Längsverteilerrinne mit der inneren Umlenkfläche der jeweiligen Bogenwälzkörperreihe verbindet. Damit wird das Schmiermittelverteilungssystem in das Umlenkstück verlegt, welches unabhängig von der Endplatte durch Spritzgießen ohne Nacharbeit hergestellt werden kann.

Es empfiehlt sich, daß der Schmiermittelzufluß an einer zur Anlagefläche der Endplatte parallelen Stirnfläche der Endplatte angebracht ist, und zwar derart, daß ein an den Schmiermittelzufluß angelegtes Schmiergerät einen Druck auf die Endplatte senkrecht zur Anlagefläche ausübt. Dies hat den Vorteil, daß der Anlagedruck der Geräts zu einem Anpressen der Endplatte an den Lagerhauptkörper führt und kein Schmiermittel zwischen der Endplatte und dem Lagerhauptkörper entweichen kann.

Das erfindungsgemäße Wälzlagerkonzept läßt sich insbesondere bei Wälzlagern anwenden, bei denen der Lagerhauptkörper zwei einander gegenüberliegende Paare von Wälzkörperumläufe umfaßt, welche zwischen sich die Schiene aufnehmen. Dabei ergibt sich eine Schienenprofilform von annähernd rechteckigem Querschnitt, wobei in zwei einander gegenüberliegenden Seitenflächen Versenkungen angeordnet sind, an deren Rändern die Laufbahnen der Schiene angebracht sind, wobei zwischen diesen Laufbahnen die Haltestege Platz finden.

Im Hinblick auf einfache Fertigung werden die Wälzkörperumläufe in den U-Schenkeln des Lagerhauptkörpers mit Vorteil parallel zu dem U-Steg des Lagerhauptkörpers angeordnet.

Neben der regelmäßigen einstückigen Gestaltung des Lagerhauptkörpers ist es nach einem neuen Konzept auch denkbar, daß die sich gegenüberliegenden Paare von Wälzkörperumläufen in Teilen des Lagerhauptkörpers untergebracht sind, deren gegenseitiger Abstand variabel ist. Auf diese Weise lassen sich Teile von Lagerhauptkörpern als Normteile herstellen, die für verschiedene Schienenbreite in verschiedenen Abständen angeordnet werden können, wobei sie entweder durch entsprechende Verbindungsstücke miteinander verbunden werden oder unmittelbar einzeln an dem jeweils zu führenden Maschinenteil angebracht werden. Diese Ausbildung ist grundsätzlich unabhängig von der erfindungsgemäßen Gestaltung der Käfigteile.

Auch die Laufschiene kann aus zwei Profilteilen mit lastaufnehmenden Laufbahnen und mit mindestens einem Zwischenstück zusammengesetzt sein; damit ergibt sich die Möglichkeit, Laufschienen unterschiedlicher Breite aus Normteilen zusammenzusetzen, die in großen Stückzahlen entsprechend billig hergestellt werden können.

Um das Eintreten von Schmutz in den Bereich der Wälzkörperumläufe zu verhindern, beispielsweise von Metallspänen, wenn das Lager zur Führung eines Schlittens auf einer Werkzeugmaschine verwendet wird, wird vorgeschlagen, daß an den Endplatten auf deren von dem Lagerhauptkörper abgewandten Stirnflächen Dichtplatten angebracht sind, welche eine dem Profil der Schiene wenigstens auf einem Teil von dessen Umfang wenigstens annähernd folgende Dichtkante aufweisen. Die Dichtkante wird dabei natürlich so ausgestaltet, daß sie sich möglichst dicht an den Profilumfang der Schiene anschmiegen kann. Um die Dichtplatte einerseits zu schützen und andererseits das gefällige Aussehen des Lagerhauptkörpers und der Endplatten nicht zu beeinträchtigen, kann man die Dichtplatten in Ausnehmungen der Stirnflächen aufnehmen im wesentlichen bündig zu den Stirnflächen. Dadurch ergibt sich auch eine Verringerung der Baulänge gegenüber bekannten Ausführungsformen mit aufgesetzten Dichtplatten.

Im Hinblick auf einfache Montage kann man die Dichtplatten auf den Endplatten durch Schnappverbindungen befestigen; dabei können die Schnappverbindungen druckknopfartig ausgebildet sein und beispielsweise von ineinandergreifenden C-Profilen und Wulstprofilen gebildet sein.

Um die Abdichtung der Wälzkörperumläufe noch weiter zu perfektionieren, insbesondere im Hinblick auf etwaiges Schmutzeindringen durch Befestigungsöffnungen der Schiene, kann man an dem Lagerhauptkörper und gegebenenfalls auch an den Endplatten beidseits der lastübertragenden Wälzkörperreihen eines Paars von Wälzkörperumläufen zu den lastübertragenden Wälzkörperreihen parallele Dichtleisten anbringen, welche an der Schiene gleitend anliegen.

Wenn der Lagerhauptkörper im Querschnitt U-förmig ausgebildet ist und man stellt sich eine Belastungssituation vor, bei welcher der Steg des U-Querschnitts von der Schiene sich abzuheben sucht, so bedeutet diese Belastungssituation eine Spreizwirkung auf die U-Schenkel. Die Stabilität des U-Querschnitts gegen solche Spreizwirkung kann dadurch verbessert werden, daß der U-Steg des Lagerhauptkörpers eine schienenferne Anlagefläche zur Anlage an einem Maschinenteil aufweist und daß der U-Steg mit dem Maschinenteil durch Bolzenverbindungen oder dergleichen verbunden ist, welche nahe den U-Schenkeln und ggf. auch annähernd mittig zwischen den U-Schenkeln angeordnet sind. Für eine solche Anordnung von Bolzenverbindungen zwischen den U-Schenkeln ist die erfindungsgemäße Ausgestaltung besonders geeignet, weil Käfigteile im Bereich des U-Stegs fehlen.

Es wird also erfindungsgemäß eine Linearführung mit einfach zu fertigendem Lagerhauptkörper und einem Kunststoffkäfig geschaffen, der eine saubere Wälzkörperumlenkung mit ruhigem Ablauf und geringem Verschleiß ermöglicht und gleichzeitig die Aufgabe der Schmierstoffverteilung und die Aufnahme der Lagerabdichtung wahrnimmt. Das gesamte Lagerelement läßt sich aus wenigen, wirtschaftlich herstellbaren Teilen aufbauen, ohne daß Nacharbeiten am Lagerhauptkörper für die Wälzkörperumlenkung notwendig sind.

Nach einer ersten Ausführungsform können die Wälzkörperumläufe Kugelumläufe sein.

In diesem Fall wählt man bevorzugt eine solche Gestaltung, daß die lastübertragenden Kugelreihen des Paars von Kugelumläufen auf der einen Seite einer die Achsen der beiden lastübertragenden Kugelreihen des Paars enthaltenden Ebene an den Laufrillen des Lagerhauptkörpers anliegen und auf der anderen Seite dieser Ebene mit einander zugekehrten Umfangsbereichen an den Haltestegen anliegen und mit voneinander abgelegenen Umfangsbereichen an den Laufrillen der Schiene anliegen.

Aus Gründen der Herstellungsvereinfachung empfiehlt es sich weiter, daß benachbart liegenden Bogenkugelreihen der Kugelumläufe des Paars ein gemeinsames halbzylindrisches Umlenkstück zugeordnet ist, welches von einer gemeinsamen halbzylindrischen Umlenkstückaufnahmerinne aufgenommen ist.

Für den ruhigen Lauf ist es vorteilhaft, wenn die äußere Umlenkfläche und die innere Umlenkfläche einen Umlenkkanal von annähernd konstantem Querschnitt bilden.

Im Hinblick auf eine weitere Vergrößerung der Tragzahl und der Momentenbelastung kann es auch angebracht sein, daß die Wälzkörperumläufe Rollenumläufe sind, daß die lastübertragenden Wälzkörperreihen lastübertragende Rollenreihen sind, daß die rücklaufenden Wälzkörperreihen rücklaufende Rollenreihen sind und daß die Bogenwälzkörperreihen Bogenrollenreihen sind.

Die konstruktive Ausbildung des Wälzlagers mit Rollen ist in der Regel schwieriger als mit Kugeln, insbesondere dann, wenn man in einem Schnitt senkrecht zur Schienenachse betrachtet nur beschränkten Raum für die Unterbringung der Rollenumläufe zur Verfügung hat.

Eine erste Möglichkeit, um bei Rollenumläufen diese gleichwohl auf engem Raum unterbringen zu können, besteht darin, daß paarweise zusammengehörige Rollenumläufe in sich schneidenden Ebenen angeordnet sind, wobei die Schnittlinie dieser Ebenen parallel zur Achse der Schiene liegt, daß die jeweils ein und derselben Endplatte zugehörigen Bogenrollenreihen paarweise zusammengehöriger Rollenumläufe in Achsrichtung der Schiene beabstandet sind und sich kreuzen und daß die Rollen der lasttragenden Rollenreihen, die Rollen der rücklaufenden Rollenreihen und die Rollen der Bogenrollenreihen in jedem der Rollenumläufe zueinander achsparallel sind.

Um bei einer solchen Ausführungsform die Herstellung der Umlenkflächen nach üblichen technischen Methoden zu ermöglichen, ist vorgeschlagen, daß die Umlenkflächen der sich kreuzenden Bogenkugelreihen an der jeweiligen Endplatte und an in dieser Endplatte versenkten Umlenkstücken ausgebildet sind, nämlich einem äußeren, d. h. dem Lagerhauptkörper ferneren Umlenkstück und einem inneren, d. h. dem Lagerhauptkörper näheren Umlenkstück.

Im einzelnen erweist sich eine Ausführungsform als besonders vorteilhaft, die dadurch gekennzeichnet ist, daß von den beiden sich kreuzenden Bogenrollenreihen die äußere, d. h. dem Lagerhauptkörper fernere Bogenrollenreihe eine äußere Umlenkfläche besitzt, welche in einer Versenkung der Endplatte ausgebildet ist und eine innere Umlenkfläche, welche von dem äußeren Umlenkstück und dem inneren Umlenkstück gebildet ist und daß die innere, d. h. die dem Lagerhauptkörper nähere Bogenrollenreihe eine äußere Umlenkfläche besitzt, welche teils von dem äußeren Umlenkstück und teils von der Versenkung der Endplatte gebildet ist und eine innere Umlenkfläche, welche von dem inneren Umlenkstück gebildet ist.

Auch bei dieser Ausführungsform läßt sich die Schmiermittelversorgung über die Umlenkstücke ermöglichen.

Im Hinblick auf eine identische Form der beiden Endplatten und gegebenenfalls der zurhörigen Haltestege empfiehlt es sich, daß die paarweise zusammengehörigen Rollenumläufe in Achsrichtung der Schiene annähernd gleiche Länge besitzen, wobei der eine der Rollenumläufe im Bereich der einen Endplatte die innere Bogenrollenreihe und im Bereich der anderen Endplatte die äußere Bogenrollenreihe bildet.

Eine weitere Ausführungsform mit Rollen ist in der Weise aufgebaut, daß zwei paarweise zusammengehörige Rollenumläufe in zueinander im wesentlichen parallelen oder in sich spitzwinkelig außerhalb der Rollenumläufe schneidenden Ebenen mit zur Achsrichtung der Schiene paralleler Schnittlinie angeordnet sind, daß in jedem Rollenumlauf die Rollen der lastübertragenden Rollenreihe einerseits und die Rollen der rücklaufenden Rollenreihe andererseits mit ihren Rollenachsen in gemeinsamen, gegeneinander geneigten Ebenen angeordnet sind und daß die Rollen der Bogenrollenreihe mit ihren Achsen auf einer Konusfläche angeordnet sind.

Bei dieser Ausführungsform kann man eine solche Gestaltung wählen, daß eine Bogenrollenreihe eine äußere, d. h. dem Lagerhauptkörper fernere Umlenkfläche besitzt, welche durch eine Versenkung in der jeweiligen Endplatte gebildet ist und aus zwei äußeren Teilumlenkflächen besteht, nämlich einer ersten konischen Teilumlenkfläche, welche den Mantelflächen der Rollen anliegt und einer zweiten äußeren konischen Teilumlenkfläche, welche jeweils einer Stirnfläche der Rollen der Bogenrollenreihe anliegt und daß jede Bogenrollenreihe ferner eine innere, d. h. dem Lagerhauptkörper nähere Umlenkfläche besitzt, welche an einem in der jeweiligen Endplatte versenkt angeordneten Umlenkstück gebildet ist und aus zwei inneren Teilumlenkflächen besteht, nämlich einer ersten inneren konischen Teilumlenkfläche, welche jeweils an den Mantelflächen der Rollen der Bogenrollenreihe anliegt und einer zweiten inneren konischen Teilumlenkfläche, welche an den anderen Stirnflächen der Rollen der Bogenrollenreihe anliegt.

Auch bei dieser Ausführungsform kann man die Schmiermittelversorgung über die Umlenkstückaufnahme bzw. das Umlenkstück selbst herstellen.

Aus Gründen der herstellungstechnischen Vereinfachung empfiehlt es sich, daß ein gemeinsames Umlenkstück den beiden paarweise zusammengehörige Rollenumläufen zugeordnet ist.

Die Rollen können als Zylinderrollen, als Tonnenrollen oder als zylindrische Nadeln ausgebildet sein.

In beiden Ausführungsformen von Rollenlagern ist es möglich, die Rollen einzeln laufen zu lassen, so daß auf die Verbindung der Rollen untereinander durch eine Kette oder ein Band verzichtet werden kann, wie sie beispielsweise aus der europäischen Patentschrift 138 360 bekannt ist. Es ist aber nicht ausgeschlossen, daß die Rollen untereinander durch eine solche Kette oder ein solches Band verbunden sind.

Insbesondere bei der zuletzt beschriebenen Rollenausführungsform, bei der die Rollen über konische Umlenkflächen laufen und sich im Bereich der Bogenrollenreihen Abstände zwischen den Rollen an jeweils einem Ende der Rollen ergeben, könnte es auch vorteilhaft sein, zwischen den Rollen einzelne Abstandsstücke vorzusehen.

Auch einzelne Merkmale und Merkmalskombinationen der Unteransprüche sind in der WO-A-8 602 417 offenbart.

Anhand der beigefügten Figuren soll die Erfindung näher beschrieben werden. Es zeigen:

Fig. 1 eine Gesamtansicht des Wälzlagers;

Fig. 2a eine Stirnansicht im Halbschnitt auf die Schienenführung mit eingebauten Haltestegen;

Fig. 2b eine Seitenansicht der Schienenführung;

Fig. 2c die Stirnansicht gemäß Fig. 2a einer anderen Ausführung;

Fig. 2d die Seitenansicht gemäß Fig. 2b der anderen Ausführung;

Fig. 2e die lastübertragenden Kugelreihen in Vergrößerung;

Fig. 3 eine Ansicht der Endplatten, von innen gesehen;

Fig. 4 den Schnitt IV-IV gemäß Fig. 3;

Fig. 5 eine Ansicht der Endplatten, von außen gesehen;

Fig. 6 die Vergrößerung eines Haltestegs gemäß VI in Fig. 3;

Fig. 7 die Vergrößerung der Schnappverbindung gemäß VII in Fig. 4;

Fig. 8 den Schnitt VIII-VIII gemäß Fig. 3;

Fig. 9 das Umlenkstück im Einbauzustand;

Fig. 9a den Schnitt nach Linie IXa-IXa der Fig. 9;

Fig. 10 eine Seitenansicht der planen Seite des halbzylindrischen Umlenkstücks;

Fig. 10a den Schnitt Xa-Xa gemäß Fig. 10;

Fig. 11 die Draufsicht auf das Umlenkstück gemäß Fig. 10;

Fig. 12 die Außenansicht der Dichtplatte;

Fig. 13 den Schnitt XIII-XIII gemäß Fig. 12;

Fig. 14 eine Variante des Lagerelements;

Fig. 15 eine Ansicht einer Endplatte bei einer Ausführungsform des Lagers mit sich kreuzenden Rollenumläufen, und zwar eine Ansicht auf die Anlagefläche der Endplatte.

Fig. 16 einen Schnitt nach Linie XVI-XVI der Fig. 15;

Fig. 17 einen Schnitt nach Linie XVII-XVII der Fig. 15;

Fig. 18 einen Schnitt nach Linie XVIII-XVIII der Fig. 15;

Fig. 19 eine Explosionsansicht des inneren und äußeren Umlenkstücks bei der Ausführungsform nach den Fig. 15 bis 18;

Fig. 20 eine Explosionsansicht des inneren und des äußeren Umlenkstücks in um 90° gedrehter Betrachtungsrichtung;

Fig. 21 eine perspektivische Explosionsansicht zu Fig. 19 und 20;

Fig. 22 eine Abwandlung zu Fig. 15 mit Sicherungselementen für die Rollen;

Fig. 23 eine Ansicht entsprechend Fig. 15 auf die Anlagefläche einer Endplatte bei einer weiteren Ausführungsform;

Fig. 24 einen Schnitt nach Linie XXIV-XXIV der Fig. 23;

Fig. 25 eine perspektivische Ansicht eines Umlenkstücks bei der Ausführungsform nach Fig. 23;

Fig. 26 eine Ansicht des Umlenkstücks gemäß Fig. 25 in Pfeilrichtung XXVI der Fig. 25;

Fig. 27 eine Ansicht in Richtung XXVII der Fig. 25;

Fig. 28 eine Ansicht eines Abstandsstücks zwischen zwei aufeinanderfolgenden Rollen im Bereich einer Bogenwälzkörperreihe, und

Fig. 29 eine Draufsicht auf ein Abstandsstück gemäß Fig. 28 zwischen zwei aufeinanderfolgenden Rollen, welche zueinander achsparallel sind, d. h. sich im Bereich einer lastübertragenden Wälzkörperreihe oder einer rücklaufenden Wälzkörperreihe befinden.

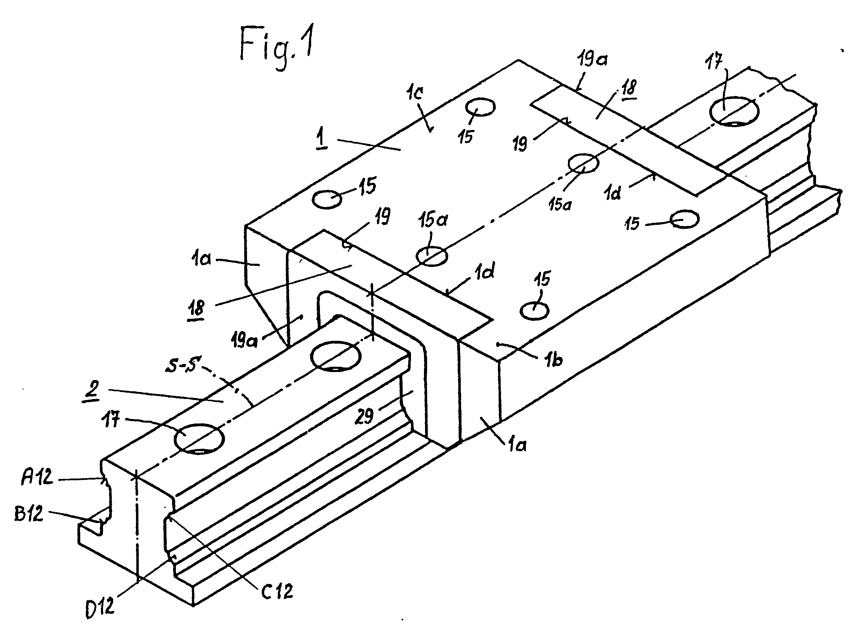

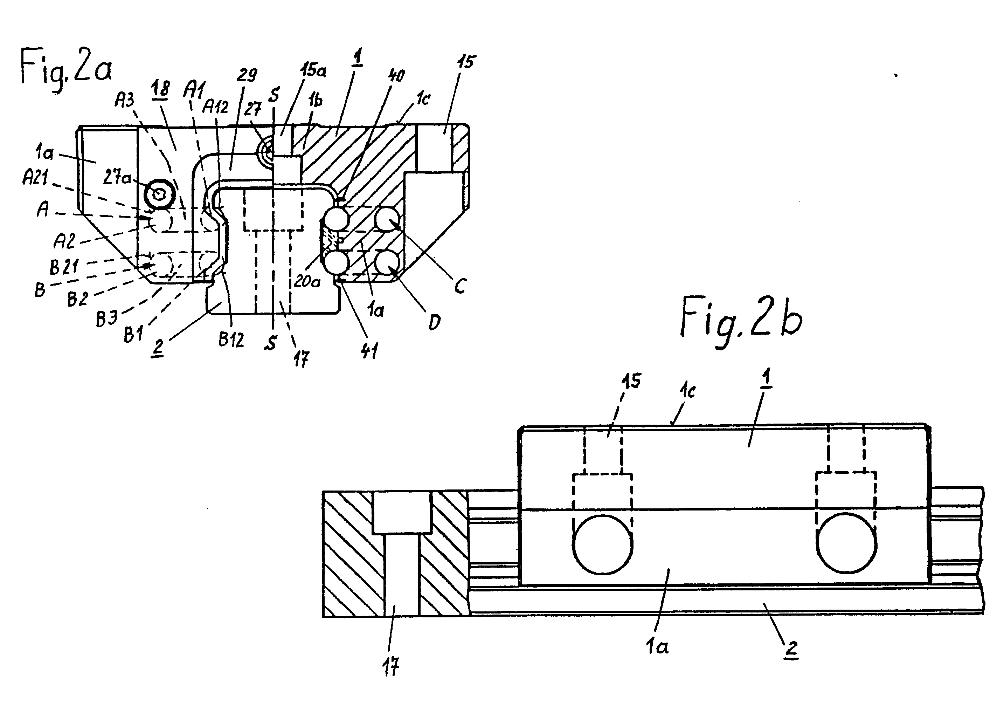

In Fig. 1, Fig. 2a und Fig. 2b wird die erfindungsgemäße Schienenführung als Lagereinheit dargestellt. Ein Lagerhauptkörper 1 mit vier Kugelumläufen A, B, C, D und damit axial verlaufenden, lasttragenden Kugelreihen A1, B1, ... ermöglicht in Verbindung mit vier in einer Schiene 2 eingearbeiteten Laufrillen A12, B12, C12, D12 die Längsbewegung von gegeneinander verschiebbaren Teilen, auch unter gleichzeitiger Beaufschlagung des Lagerhauptkörpers 1 oder der Schiene 2 mit einem Drehmoment. Die rücklaufenden Kugelreihen A2, B2 werden innerhalb des Lagerhauptkörpers 1 in Rücklaufbohrungen A21, B21. ... geführt, so daß vier Kugelumläufe A, B, C, D mit die lastübertragenden Kugelreihen A1, B1 usw. und die rücklaufenden Kugelreihen A2, B2 usw. verbindenden Bogenkugelreihen A3, B3 usw. entstehen. Jeweils zwei Kugelumläufe A, B; C, D liegen auf einer Ebene, die senkrecht zur Symmetrieebene S-S der Lagereinheit liegt.

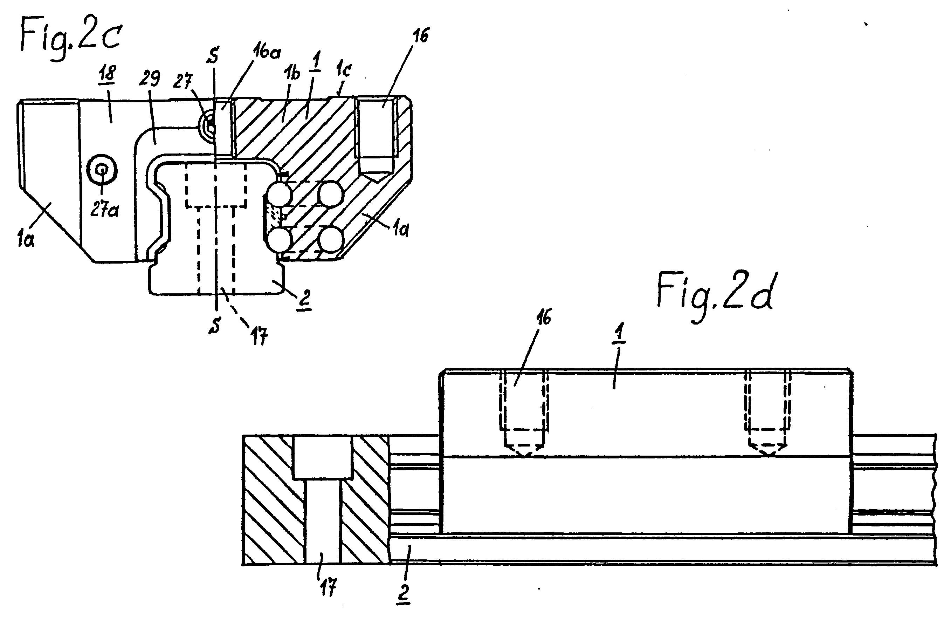

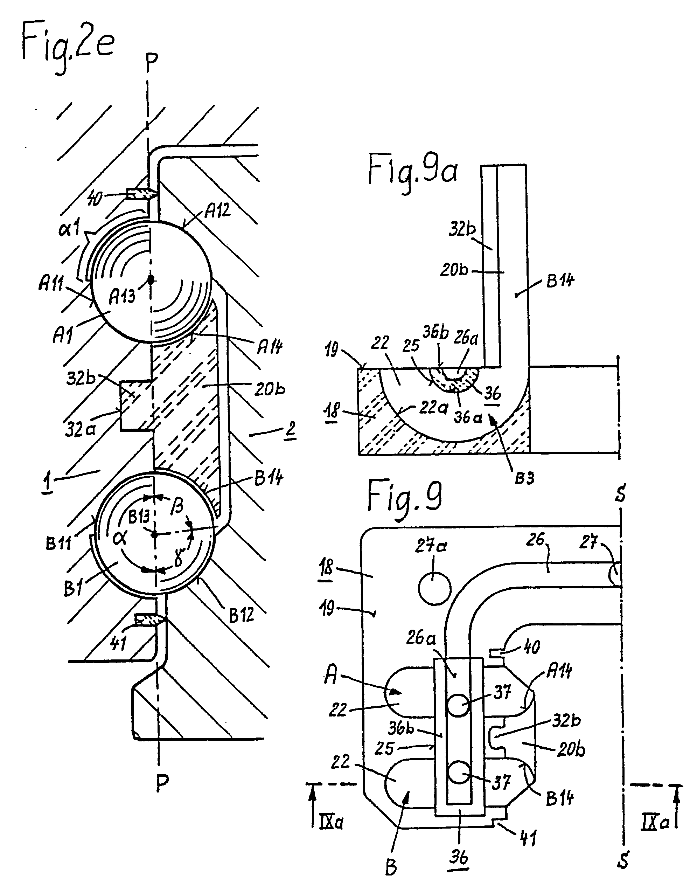

Die Befestigung des Lagerhauptkörpers 1 erfolgt durch Bolzenverbindungen mit Durchgangsbohrungen 15, die sich bezogen auf die Symmetrieebene S-S im äußeren Bereich des Lagerhauptkörpers 1 befinden und in dessen Symmetrieebene S-S, nämlich bei 15a. In einer anderen Ausführung (Fig. 2c, Fig. 2d) können anstelle der Durchgangsbohrungen 15a auch Gewindebohrungen 16, 16a vorgesehen werden. Durch die zusätzliche mittige Befestigungsmöglichkeit des Lagerhauptkörpers wird dessen Durchbiegung bei seitlicher und abhebender Belastung verhindert und somit die Steifigkeit der Lagereinheit erhöht. Die Schiene 2 wird über mittige Bohrungen 17 mit dem Untergrund verschraubt.

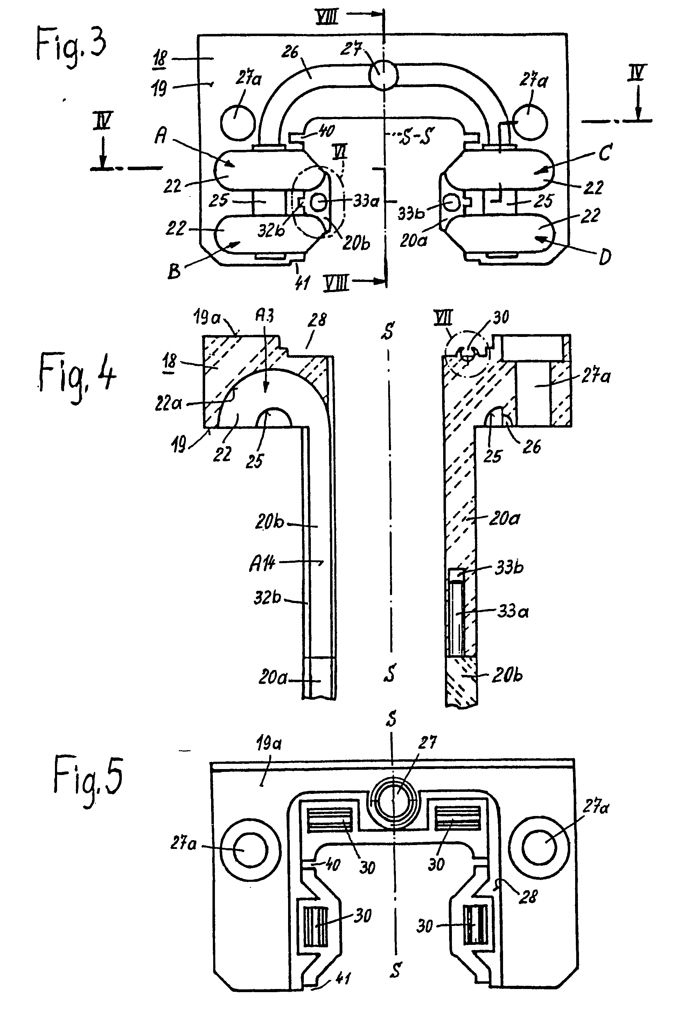

Fig. 3 und 4 zeigen eine Hälfte des in achsnormaler Ebene zweigeteilten Kunststoffkäfigs in der Innenansicht und im Schnitt, bestehend aus der Endplatte 18 mit anlagefläche 19 und zwei sich axial erstreckenden Haltestegen 20a, 20b, die zusammen mit der Endplatte 18 einstückig ausgebildet sind und die Aufgabe haben, die lastübertragenden Kugelreihen A1, B1, ... im Lagerhauptkörper 1 während des Bewegungsablaufs zu führen, d.h. vermittels der Halterillen A14, B14, ... an den Laufrillen A11, B11, ... des Lagerhauptkörpers 1 zu halten, und zwar schon vor dem Zusammenbau des Lagerhauptkörpers 1 mit der Schiene 2, bei dem dann die lastübertragenden Kugelreihen in Eingriff mit den lastaufnehmenden Laufrillen A12, B12, ... der Schiene 2 kommen; hierzu wird auf Fig. 2e verwiesen, wo die an den Lauf- und Halterillen A11, B11, ...; A12, B12, ...; A14, B14; ... anliegenden Umfangsbereiche der lastübertragenden Kugelreihen A1, B1, ... mit $\alpha$, $\gamma$ bzw. $\beta$ bezeichnet sind. Die Winkelsumme $\alpha + \beta$ ist größer als 180°.

Dadurch ist sichergestellt, daß die Kugeln auch außerhalb der Schiene im Lagerhauptkörper sicher gehalten sind. Zur Vermeidung von «bohrender Reibung» ist im Bereich 1 die Berührung der Kugeln mit dem Lagerhauptkörper durch eine geringfügige Ausnehmung unterbrochen. Eine Reibung der Kugeln an dem Haltesteg 20a, 20b ist nach Zusammenbau mit der Schiene durch entsprechendes Spiel im Bereich β unterbunden.

Vier U-förmige Ausnehmungen 22 in der Endplatte 18 bilden äußere Umlenkflächen 22a für die Bogenkugelreihen A3, B3, ... Die Endplatte 18 ist innerhalb einer Ausnehmung untergebracht, welche eine Endfläche 1d des Lagerhauptkörpers bildet. In der Endplatte sind weiterhin halbzylindrische Umlenkstückaufnahmerinnen 25 vorhanden, in die bei der Montage entsprechende halbzylindrische Umlenkstücke 36 plaziert werden. In Fortsetzung der Umlenkstückaufnahmerinnen 25 erstreckt sich eine Schmiermittelversorgungsrinne 26 mit halbzylindrischem Querschnitt bis zur Symmetrieachse S-S der Endplatte 18, wo eine Schmierbohrung 27 mit Gewindeanschluß die Versorgung der vier Kugelumläufe A, B, C, D mit Schmierstoff sicherstellt. Die Befestigung der Kunststoffkäfighälften 18, 20a, 20b am Lagerhauptkörper 1 des Lagerelements erfolgt über zwei Bohrungen 27a in der Endplatte 18 des Käfigs. Eine Ausnehmung 28 ermöglicht die Integration einer Dichtplatte 29. Die Verankerung der Dichtplatte 29 geschieht über eine Mehrzahl von Schnappverbindungen 30, 39 (Fig. 4, 7, 12, 13).

Die im Kunststoffkäfig integrierte Dichtplatte 29 verhindert mit ihrer dem Profil der Schiene 2 folgenden Dichtkante 29a jedenfalls das Eindringen von Schmutz. Zusätzlich eingelegte Dichtstreifen 40, 41, die unmittelbar oberhalb (40) bzw. unterhalb (41) der lastübertragenden Kugelreihen A1, B1 im Lagerhauptkörper 1 sowie an den Endplatten 18 angebracht werden und bis an die Dichtplatten 29 heranreichen, sorgen dafür, daß kein Schmutz, der eventuell über die Schienenbohrungen 17 in das Lagerelement 1 hingelangt ist, die Kugeln bzw. die Kontaktzone mit der Schiene 2 erreicht. Damit ist eine annähernd hermetische Abdichtung des Abwälzbereiches ermöglicht.

In Fig. 5 wird die Ausnehmung 28 zur Aufnahme der Dichtplatte 29 und in Fig. 5, 7, 12 und 13 die Lage der Schnappelemente 30, 39 deutlich.

Fig. 6 stellt die Vergrößerung eines Haltesteges 20b gemäß Fig. 3 dar. Zur Führung der lastübertragenden Kugelreihen A1, B1 sind am Haltesteg 20b zwei dem Kugeldurchmesser angepaßte Halterillen A14, B14 angeformt. Der Haltesteg 20 wird gegen Verbiegen durch eine Feder 32b, die in eine entsprechende Nut 32a im Lagerhauptkörper eingreift, auf seiner ganzen Länge gesichert. Zusätzlich werden die Haltestege 20a, 20b der beiden Käfighälften durch in die Bohrung 33b eingesetzte Stifte 33a miteinander verbunden.

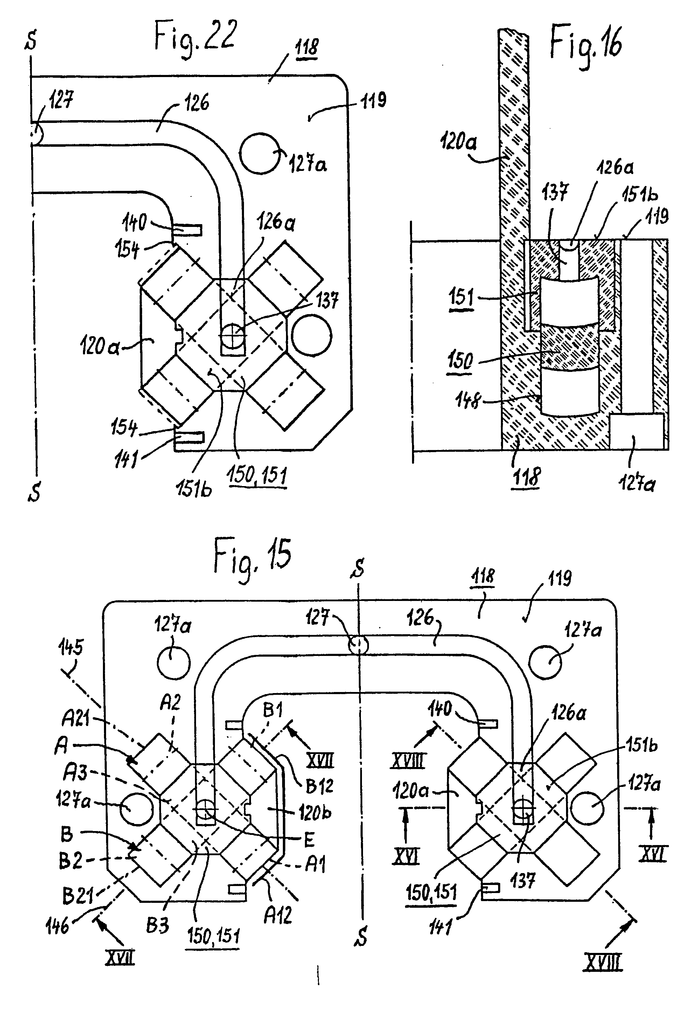

Fig. 7 zeigt den Aufbau des C-Profils 30 der Schnappverbindung 39, mit der die Dichtplatte 29 in der Endplatte 18 befestigt wird. Zwei bogenförmig gekrümmte Zungen 34 bilden zusammen mit einer Vertiefung 35 ein C-Profil. Ein entsprechend geformtes Wulstprofil 39 (Fig. 13) an der Dichtplatte 29 wird in das C-Profil eingeschnappt, indem die elastischen Zungen 34 weggebogen werden.

In Fig. 8 ist der Schnitt VIII-VIII gemäß Fig. 3 dargestellt. Die im Verlauf U-förmige, symmetrische Schmiermittelversorgungsrinne 26 (siehe Fig. 3) hat einen Halbkreisquerschnitt.

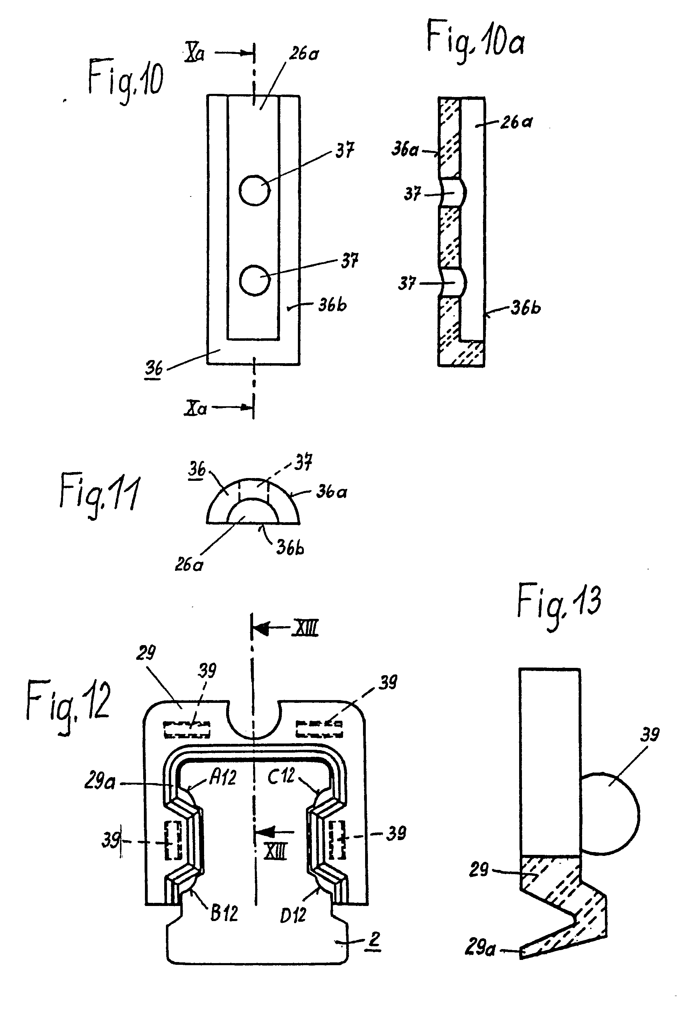

Das in Fig. 9, 9a, 10, 10a und 11 gezeigte halbzylindrische Umlenkstück 36 weist auf seiner planen Rückseite 36b eine Längsverteilerrinne 26a als Fortsetzung der besagten Schmiermittelversorgungsrinne 26 mit demselben Halbkreisquerschnitt auf. Zwei Querbohrungen 37 im Umlenkstück 36 verbinden die Längsverteilerrinne 26a mit den Bogenkugelreihen A3, B3, ...; diese Querbohrungen 37 durchsetzen die an den Umlenkstücken 36 angeformten inneren Umlenkflächen 36a. Die innere Umlenkfläche 36a übernimmt die Innenführung der Bogenkugelreihen A3, B3, ... und sorgt für einen ruhigen Kugellauf.

In Fig. 9 ist erkennbar, daß die Bohrungsmittelpunkte der Querbohrungen 37 des inneren Umlenkstückes 36 nach Fig. 10, 10a und 11 nicht auf dem Mittenabstand der beiden Ausnehmungen 22 liegen, sondern enger beisammen sind. Dies hat den Grund, daß die Querbohrungen 37 den Kugelablauf im Bereich der inneren Umlenkfläche 36a nicht stören sollen. Um den gleichen Effekt zu erreichen, könnten sie selbstverständlich auch entsprechend weit voneinander weg gelegt werden.

Fig. 12 und Fig. 13 zeigen die Außen- und Innenkontur der Dichtplatte 29 und die Form der Dichtlippe 29a. Die Befestigung der Dichtplatte 29 erfolgt über die Schnappverbindungen, welche die Dichtplatte 29 in die Kunststoffkäfighälfte 18, 20a, 20b integrieren, die Dichtplatte besteht aus relativ weichem Kunststoff oder Gummimaterial.

In Fig. 14 wird eine Erweiterung der Einsatzmöglichkeiten des Lagerelements gezeigt. Für besondere Einbaufälle kann es vorteilhaft sein, den Lagerhauptkörper 1 zu teilen, um z. B. die Montage einer breiteren Schiene 2 zu ermöglichen. Durch die Lage der Kugelumläufe und die daraus resultierende Käfigkonstruktion mit nur einer Gruppe von fluchtenden Haltestegen 20a, 20b für zwei lastübertragende Kugelreihen ist es möglich, den Lagerhauptkörper und den Käfig mit relativ geringem Aufwand längs der Symmetrieebene S-S zu teilen. Die Abdichtung bleibt dabei erhalten. Lediglich die Schmiermittelversorgung muß abgeändert werden, so daß beide durch den Schnitt entstandenen Teile 40a, 40b des Lagerhauptkörpers 1 einzeln geschmiert werden können. Wird auch noch die Schiene 2 geteilt, nämlich in zwei Profilteile 42a und 42b und ggf. ein Zwischenstück 42c, dann erhöht sich der Einsatzbereich der Lagerung noch weiter. Im Prinzip können damit beliebig breite Längsführungen realisiert werden. Das Zwischenstück 42c wird entsprechend dimensioniert.

Zu Fig. 5 ist noch nachzutragen, daß der Schmiermittelanschluß 27 in der Endplatte an deren Stirnfläche 19a angebracht ist. Wenn eine Schmiermittelpresse angesetzt wird, um Schmiermittel in die Schmiermittelversorgungsrinne 26 einzupressen, so hält die Kraft, mit der die Schmiermittelpresse gegen die Endplatte 18 angedrückt wird, derjenigen Kraft das Gleichgewicht, die von dem Druck des Schmiermittels in der Schmiermittelversorgungsrinne 26 aufgebaut wird. Damit wird verhindert, daß sich die aus Kunststoff bestehende Endplatte 18 von der ihr anliegenden Endfläche 1d des Lagerhauptkörpers 1 abhebt. Damit wird weiter verhindert, daß Schmiermittel zwischen der Endfläche 1d und der Stirnfläche 19 der Endplatte 18 austritt und somit vorzeitig der Eindruck erweckt wird, als ob alle zu schmierenden Teile des Lagers bereits hinreichend geschmiert wären.

In den Fig 15 bis 22 ist eine Ausführungsform mit Rollen dargestellt. Analoge Teile sind mit gleichen Bezugszeichen versehen wie in den Fig. 1 bis 14, jeweils vermehrt um die Zahl 100.

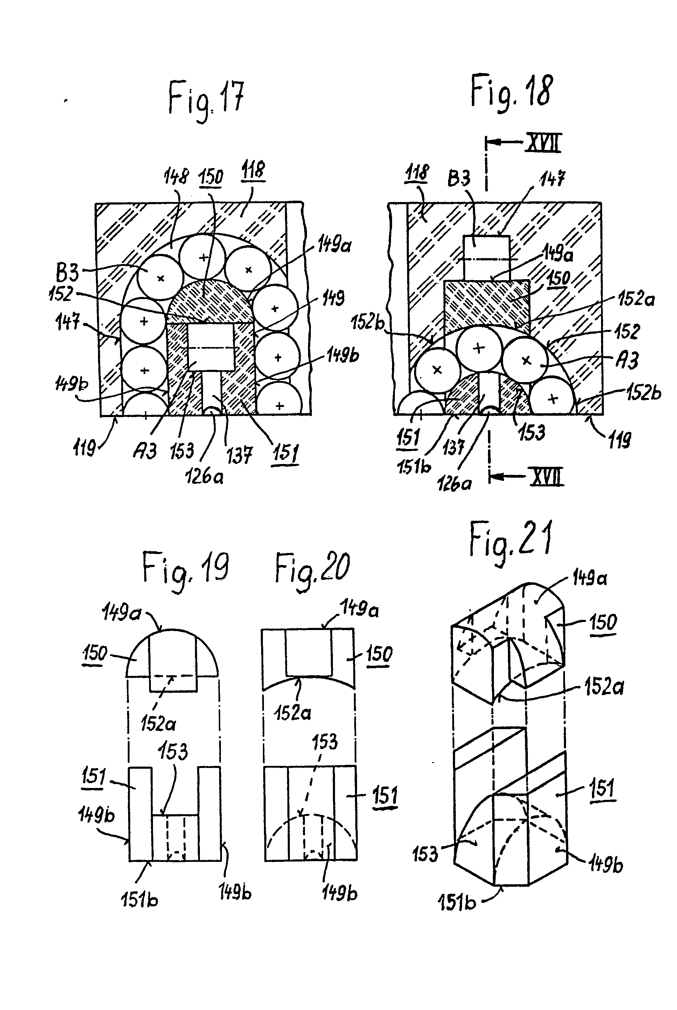

In Fig. 15 erkennt man eine Endplatte 118, und zwar deren dem Lagerhauptkörper (nicht dargestellt) zugekehrte Anlagefläche 119 mit der Schmiermittelversorgungsrinne 126. Es sind auf jeder Seite der Schiene (nicht eingezeichnet) zwei Paare von Rollenlagern dargestellt, wobei es genügt, die linke Hälfte der Fig. 15 zu beschreiben, in welcher man die Rollenumläufe A und B erkennt. Die Rollenumläufe A und B sind in sich schneidenden Ebenen 145 und 146 angeordnet. Die Ebenen 145 und 146 schneiden sich in einer Schnittlinie E, die parallel zur Längsachse der nicht eingezeichneten Schiene und des Lagerhauptkörpers ist. Die lastübertragenden Rollenreihen sind mit A1 und B1 bezeichnet, die rücklaufenden Rollenreihen mit B2 und A2. Die lastübertragenden Rollenreihen A1 und B1 sind zur Anlage an lastaufnehmenden Laufbahnen B12, A12 der Schiene bestimmt. Die rücklaufenden Rollenreihen A2 und B2 sind in Rücklaufkanälen A21 und B21 von quadratischem Querschnitt geführt. Die Bogenrollenreihen B3 und A3 sind — wie aus Fig. 17 und 18 zu ersehen — in ihren Scheiteln in Achsrichtung der Schiene gegeneinander versetzt und kreuzen sich. Die dem Lagerhauptkörper fernere Bogenrollenreihe B3 ist als die äußere Bogenrollenreihe bezeichnet und die dem Lagerhauptkörper nähere Bogenrollenreihe A3 ist als die innere Bogenrollenreihe bezeichnet. Die äußere Bogenrollenreihe B3 weist eine äußere Umlenkfläche 147 auf, welche durch eine Einsenkung 148 in der Endplatte 118 gebildet ist. Ferner weist die Bogenrollenreihe B3 eine innere Umlenkfläche 149 auf, die teilweise, nämlich bei 149a, von einem äußeren Umlenkstück 150 gebildet ist und teilweise, nämlich bei 149b von einem inneren Umlenkstück 151. Die innere Bogenrollenreihe A3 weist eine äußere Umlenkfläche 152 auf, die teilweise, nämlich bei 152a, von dem äußeren Umlenkstück 150 gebildet ist und teilweise, nämlich bei 152b, von der Einsenkung 148. Ferner weist die innere Bogenrollenreihe A3 eine innere Umlenkfläche 153 auf, welche von dem inneren Umlenkstück 151 gebildet ist.

Die Umlenkstücke 150 und 151 sind in der Versenkung 148 gegeneinanderstoßend angeordnet, und zwar so, daß der Teilbereich 149a der inneren Umlenkfläche 149 der äußeren Bogenrollenreihe B3 an die Teilbereiche 149b der Umlenkfläche 149 der äußeren Bogenrollenreihe B3 anschließt und daß der Teilbereich 152a der äußeren Umlenkfläche 152 der inneren Bogenrollenreihe an die Teilbereiche 152b der äußeren Umlenkfläche 152 der inneren Bogenrollenreihe A3 anschließt.

Wie aus Fig. 17 und 18 zu ersehen, weist das innere Umlenkstück 151 eine Rückenfläche 151b auf, welche bündig liegt mit der Anlagefläche 119 der Endplatte 118. In der Rückenfläche 151b des inneren Umlenkstücks 151 ist eine Längsverteilerrinne 126a eingeformt, welche an die Schmiermittelversorgungsrinne 126 anschließt und durch eine Querbohrung 137 mit der inneren Bogenrollenreihe A3 in Verbindung steht.

An der Endplatte 118 sind die Haltestege 120b und 120a angeformt, welche die lastübertragenden Rollenreihen A1 und B1 in Eingriff mit den nicht dargestellten Laufbahnen des Lagerhauptkörpers halten.

Es ist davon auszugehen, daß die Endplatte 118 an den beiden Enden des Lagerhauptkörpers miteinander identisch sind, so daß nur eine einzige Form zur Herstellung der Endplatten angewendet ist. Dies bedeutet unter Bezugnahme auf Fig. 15, 17 und 18, daß die zum Rollenumlauf A gehörige Bogenrollenreihe A3 der gegenüberliegenden Endplatte (nicht gezeichnet) eine äußere Bogenrollenreihe ist und daß die zur gegenüberliegenden Endplatte gehörige Bogenrollenreihe B3 des Rollenumlaufs B eine innere Bogenrollenreihe ist. Auf diese Weise ergeben sich gleiche Längen der Rollenumläufe A und B und gleiche Formen der beiden Endplatten. Weiter ist dadurch sichergestellt, daß jeder Rollenumlauf A und B so geschmiert werden kann, wie in Fig. 17 und 18 dargestellt.

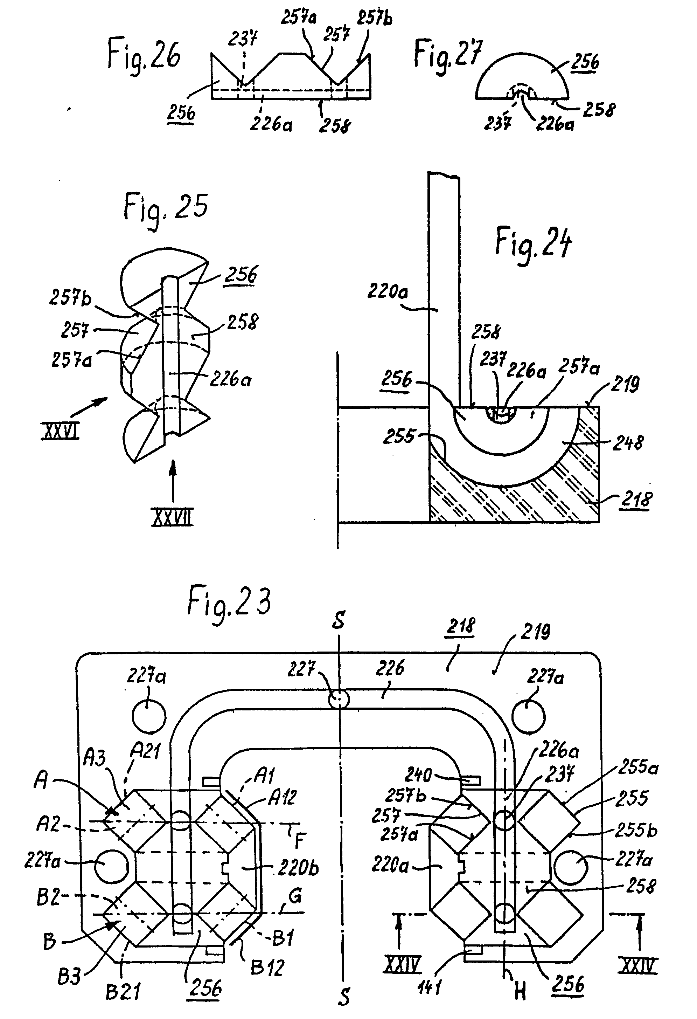

In Fig. 22 ist noch angedeutet, wie man durch Vorsprünge 154 an der Endplatte bzw. dem Lagerhauptkörper die lasttragenden Rollenreihen A1 und B1 gegen Herausfallen sichern kann. Entsprechende Vorsprünge können auch an den Haltestegen 120a, 120b angebracht sein. Da die Haltestege 120a, 120b aus relativ weichelastischem Material bestehen können wie auch die Endplatten 118, ist es ohne weiteres möglich, die Rollen an den Vorsprüngen 154 vorbei in ihre Arbeitsposition innerhalb der lasttragenden Rollenreihen A1, B1 einzudrücken. Bevorzugt werden die Rollen allerdings in der Trennebene der beiden Haltestege 120a eingebracht, wobei während der Montage die beiden Käfighälften 118 entsprechend dem Rollendurchmesser auseinandergezogen sind. Diese Montagemöglichkeit besteht auch bei den übrigen Ausführungsbeispielen, auch denjenigen mit Kugeln.

Alle übrigen Gestaltungsmerkmale, insbesondere auch hinsichtlich der Dichtplatte und der Dichtleisten, können genauso ausgeführt sein wie in der Ausführungsform nach den Fig. 1 bis 14.

Die Ausführung des Linearlagers mit Rollen hat den Vorteil, daß noch größere Lasten aufgenommen werden können. Die Rollen können als Zylinderrollen ausgebildet sein, wie in Fig. 15 bis 21 dargestellt. Sie können aber auch als Tonnen, d.h. als bombierte Rollen ausgeführt sein; auch können sie mit wesentlich kleinerem Durchmesser ausgeführt sein, in welchem Falle man von Nadeln spricht.

Die Ausführungsform nach den Fig. 15 bis 21 hat den Vorteil, daß die beiden Rollenumläufe A und B, in der Ansicht gemäß Fig. 15 betrachtet, auf verhältnismäßig kleinem Raum untergebracht werden können. Es muß dafür der Nachteil in Kauf genommen werden, daß die beiden Rollenumläufe in Längsrichtung der Schiene gegeneinander versetzt sind. Dieser Nachteil bedingt aber nur eine relativ geringfügige Verlängerung des Lagers. Die Tragfähigkeit des Lagers auch gegenüber Momenten wird praktisch unverändert aufrechterhalten.

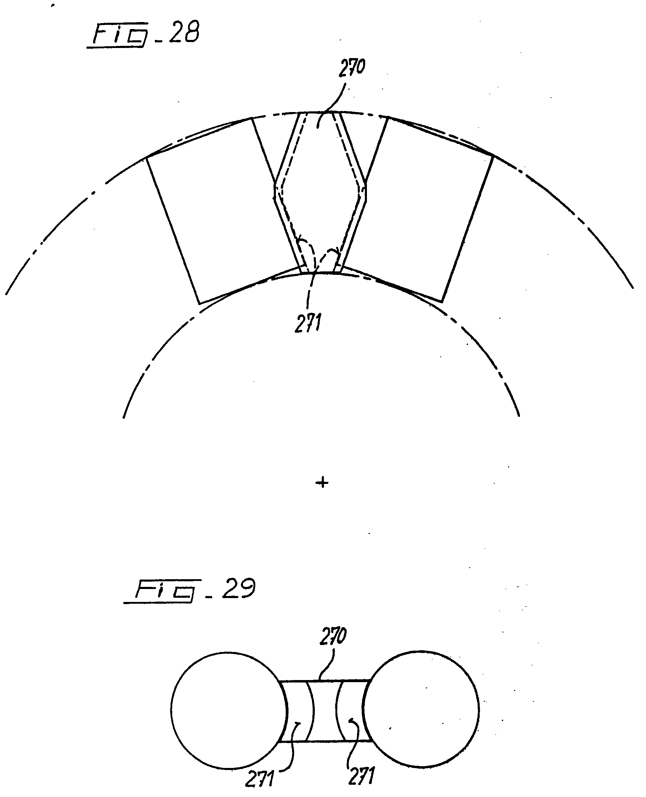

In den Fig. 23 bis 27 ist eine weitere Ausführungsform mit rollen dargestellt. Analoge Teile sind mit gleichen Bezugszeichen versehen wie in der Ausführungsform nach den Fig. 1 bis 14, jeweils vermehrt um die Zahl 200.

Bei der Ausführungsform nach Fig. 23 sind zusammengehörige Rollenumläufe A und B mit den lasttragenden Rollenreihen A1 bzw. B1 und rücklaufenden Rollenreihen A2 bzw. B2 in zueinander parallelen Ebenen F, G angeordnet. Die Ebenen F und G könnten auch gegeneinander spitzwinkelig geneigt sein, so daß sie sich außerhalb der Rollenumläufe A und B schneiden.

Die lasttragenden Rollenreihen A1 und B1 wälzen sich an den Laufbahnen A12 bzw. B12 der im übrigen nicht eingezeichneten Schiene ab. Die rücklaufenden Rollenreihen A2 bzw. B2 sind in Rücklaufkanälen A21, B21 des Lagerhauptkörpers geführt, die in Fig. 23 an sich nicht dargestellt sind und sich senkrecht zur Zeichenebene nach oben erstrecken. In der Endplatte 218 ist eine Versenkung 248 gebildet, welche eine äußere Umlenkfläche bildet. Die äußere Umlenkfläche 255 setzt sich zusammen aus zwei äußeren Teilumlenkflächen 255a und 255b. Beide Teilumlenkflächen 255a und 255b sind konisch um eine Achse H. An der Teilumlenkfläche 255a wälzen sich die Rollen der Bogenrollenreihe A3 mit ihren Umfangsflächen ab. An der Teilumlenkfläche 255b gleiten die einen Stirnflächen der Rollen der Bogenrollenreihe A3. In der Versenkung 248 ist ein Umlenkstück 256 versenkt, welches eine innere Umlenkfläche 257 aufweist. Die innere Umlenkfläche 257 setzt sich zusammen aus zwei Teilumlenkflächen 257a und 257b; die Teilumlenkfläche 257a dient der Abwälzung der Umfangsflächen der Rollen der Bogenrollenreihe A3, während an der Teilumlenkfläche 257b die anderen Stirnflächen der Rollen anliegen. auch die Teilumlenkflächen 257a und 257b sind konische Flächen um die Achse H.

Eine Rückenfläche 258 des Umlenkstücks 256 liegt bündig mit der Anlagefläche 219 der Endplatte 218. In dieser Rückenfläche 258 ist eine Längsverteilerrinne 226a ausgebildet, welche an die Schmiermittelversorgungsrinne in der Endplatte 218 anschließt. Von der Längsverteilerrinne 226a führt eine Querbohrung 237 zu der inneren Umlenkfläche 257.

An dem Umlenkstück 256 sind die inneren Umlenkflächen für Bogenrollenreihen A3 und B3 beider Rollenumläufe A und B angeformt.

Diese Ausführungsform hat ebenso wie die Ausführungsform nach den Fig. 15 bis 21 den Vorteil, daß die beiden Kugelumläufe A und B, in der Ansicht gemäß Fig. 23 betrachtet, auf kleinem Raum untergebracht werden können. Eine Kreuzung der Bogenrollenreihen ist nicht erforderlich. Die Längserstreckung beider Rollenumläufe A und B innerhalb des Lagerhauptkörpers und der Endplatten ist identisch. Die Schwierigkeiten, die sich durch die Führung der Bogenrollenreihen A3 und B3 mit gegeneinander geneigten Rollenachsen ergeben, sind durch die Gestaltung der Umlenkflächen ohne weiteres lösbar, insbesondere wenn die Endplatten und die Umlenkstücke aus gleitgünstigem Kunststoff bestehen.

Wie in Fig. 28 und 29 gezeigt, können zwischen aufeinanderfolgenden Rollen Abstandsstücke 270 vorgesehen sein, die in einer durch die Achsen zweier aufeinanderfolgender Rollen bestimmten Ebene betrachtet (Fig. 28) doppeltrapezförmig ausgebildet sind und, wie die vergrößerte Draufsicht gemäß Fig. 29 zeigt, Mantelrillen 271 für die Aufnahme aufeinanderfolgender Rollen aufweisen. Durch diese Abstandsstücke wird der Lauf der Rollen in den Bogenrollenreihen wesentlich verbessert.

Die lasttragenden Rollenreihen A1 und B1 können in ähnlicher Weise gesichert werden wie in Fig. 22 durch die Vorsprünge 154 angedeutet.

Auch die Haltestege 220a und 220b können bei dieser Ausführungsform an den Endplatten 218 angeformt sein. Die beiden Endplatten 218 können identische Form aufweisen.

Es ist noch zu bemerken, daß bei diesen Ausführungsformen die Haltestege auch von den Endplatten getrennt sein können, so daß man für den Aufbau des Käfigs jeweils vier Teile, nämlich zwei Endplatten und zwei Haltestege benötigt, wobei die Haltestege mit beiden Enden in die Endplatten eingreifen und dort vorzugsweise drehsicher gehalten sind.

**Patentansprüche**

1. Wälzlager für Linearbewegungen, umfassend einen auf einer Schiene (2) in deren Achsrichtung verschiebbar geführten Lagerhauptkörper (1) mit zwei in Achsrichtung der Schiene (2) beabstandeten, im wesentlichen achsnormalen Endflächen (1d) und mindestens einem Paar von Wälzkörperumläufen (A, B), wobei jeder Wälzkörperumlauf (A, B) des Paars eine geradlinige, lastübertragende Wälzkörperreihe (A1, B1) in Eingriff mit einer achsparallelen, lastaufnehmenden Laufbahn (A11, B11) des Lagerhauptkörpers (1) und mit einer achsparallelen, lastaufnehmenden Laufbahn (A12, B12) der Schiene (2), eine rücklaufende Wälzkörperreihe (A2, B2) und zwei Bogenwälzkörperreihen (A3, B3) aufweist, wobei weiter die rücklaufenden Wälzkörperreihen (A2, B2) durch annähernd achsparallele Rücklaufkanäle (A21, B21) des Lagerhauptkörpers (1) geführt sind, wobei weiter an den Endflächen (1d) Endplatten (18) angebracht sind, in welchen Umlenkflächen (22a, 36a) für die Bogenwälzkörperreihen (A3, B3) vorgesehen sind, wobei weiter die Endplatten (18) mit in Flucht zueinander liegenden und an ihren Enden zusammenstoßenden achsparallelen Haltestegen (20a, 20b) ausgeführt sind, wobei diese Haltestege (20a, 20b) die lastübertragenden Wälzkörperreihen (A1, B1) in Eingriffstellung zu den lastaufnehmenden Laufbahnen (A11, B11) des Lagerhauptkörpers (1) halten, und wobei die beiden lastübertragenden Wälzkörperreihen (A1, B1) beider Wälzkörperumläufe (A, B) des Paars durch eine einzige, ihnen gemeinsame Gruppe von zwei miteinander fluchtenden, jeweils einer Endplatte (18) zugehörigen und zwischen den lastübertragenden Wälzkörperreihen angeordneten Haltestegen (20a, 20b) in Eingriffsstellung zu der jeweiligen Laufbahn (A11, B11) des Lagerhauptkörpers (1) gehalten sind.

2. Wälzkörper nach Anspruch 1, dadurch gekennzeichnet, daß die Haltestege (20a, 20b) Haltebahnen (A14, B14) für die lastübertragenden Wälzkörperreihen (A1, B1) aufweisen.

3. Wälzlager nach einem der Ansprüche 1 und 2, dadurch gekennzeichnet, daß die Haltestege (20a, 20b) durch eine Nut-Federverbindung (32a, 32b), insbesondere mit Schwalbenschwanzprofil oder dergleichen in dem Lagerhauptkörper (1) abgestützt sind.

4. Wälzlager nach einem der Ansprüche 1 bis 3, dadurch gekennzeichnet, daß die einander zugekehrten Enden miteinander fluchtender Haltestege (20a, 20b) durch Steckverbindungen.(33a, 33b) oder dergleichen miteinander verbunden sind.

5. Wälzlager nach einem der Ansprüche 1 bis 4, dadurch gekennzeichnet, daß eine Bogenwälzkörperreihe (A3, B3) durch eine in einer Anlagefläche (19) der Endplatte (18) versenkte, äußere, d. h. von dem Lagerhauptkörper (1) fernere Umlenkfläche (22a) und eine innere, d. h. dem Lagerhauptkörper (1) nähere Umlenkfläche (36a) geführt ist, wobei die innere Umlenkfläche (36a) an mindestens einem Umlenkstück (36) gebildet ist, welches in einer Umlenkstückaufnahme (25) in der Anlagefläche (19) der Endplatte (18) aufgenommen ist.

6. Wälzlager nach Anspruch 5, dadurch gekennzeichnet, daß die Bogenwälzkörperreihe (A3, B3) wenigstens auf einem Teil ihrer Länge annähernd einem Halbkreis folgt.

7. Wälzlager nach einem der Ansprüche 5 und 6, dadurch gekennzeichnet, daß in der Anlagefläche (19) mindestens einer Endplatte (18) eine Schmiermittelversorgungsrinne (26) vorgesehen ist, welche an einen Schmiermittelzufluß (27) der Endplatte (18) angeschlossen ist, zu der Umlenkstückaufnahme (25) führt und durch ein Schmiermittelverteilungssystem (26a, 37) innerhalb der Umlenkstückaufnahme (25) mindestens einen Wälzkörperumlauf (A, B) mit Schmiermittel versorgt.

8. Wälzlager nach Anspruch 7, dadurch gekennzeichnet, daß der Schmiermittelzufluß (27) an einer zur Anlagefläche (19) der Endplatte (18) parallelen Stirnfläche (19a) der Endplatte (18) angebracht ist, und zwar derart, daß ein an den Schmiermittelzufluß (27) angelegtes Schmiermittelgerät einen Druck auf die Endplatte (18) senkrecht zur Anlagefläche (19) ausübt.

9. Wälzlager nach Anspruch 7 oder 8, dadurch gekennzeichnet, daß das Schmiermittelverteilungssystem (26a, 37) eine Längsverteilerrinne (26a) in einer von der inneren Umlenkfläche abgelegenen Rückenfläche (36b) des Umlenkstücks (36) und eine Querbohrung (37) umfaßt, welche diese Längsverteilerrinne (26a) mit der inneren Umlenkfläche (36a) der jeweiligen Bogenwälzkörperreihe (A3, B3) verbindet.

10. Wälzlager nach Anspruch 9, dadurch gekennzeichnet, daß die Mündung der Querbohrung (37) in die innere Umlenkfläche (36a) an einer für die Führung der Wälzkörper untergeordneten Stelle erfolgt.

11. Wälzlager nach einem der Ansprüche 1 bis 10, dadurch gekennzeichnet, daß der Lagerhauptkörper (1) zwei einander gegenüberliegende Paare (A, B; C, D) von Wälzkörperumläufen (A, B, C, D) umfaßt, welche zwischen sich die Schiene (2) aufnehmen.

12. Wälzlager nach Anspruch 11, dadurch gekennzeichnet, daß der Lagerhauptkörper (1) die Schiene (2) U-förmig umgreift, wobei die Wälzkörperumläufe (A, B, C, D) in den U-Schenkeln (1a) des Lagerhauptkörpers (1) untergebracht sind.

13. Wälzlager nach Anspruch 12, dadurch gekennzeichnet, daß die Wälzkörperumläufe (A, B, C, D) in den U-Schenkeln (1a) des Lagerhauptkörpers (1) parallel zu dem U-Steg (1b) des Lagerhauptkörpers (1) angeordnet sind.

14. Wälzlager nach einem der Ansprüche 11 bis 13, dadurch gekennzeichnet, daß die sich gegenüberliegenden Paare (A, B; C, D) von Wälzkörperumläufen (A, B, C, D) in Teilen (40a, 40b) des Lagerhauptkörpers (1) untergebracht sind und deren gegenseitiger Abstand variabel ist.

15. Wälzlager nach einem der Ansprüche 11 bis 14, dadurch gekennzeichnet, daß die Laufschiene (2) aus zwei Profilteilen (42a, 42b) mit lastaufnehmenden Laufbahnen und mindestens einem Zwischenstück (42c) zusammengesetzt ist.

16. Wälzlager nach einem der Ansprüche 1 bis 15, dadurch gekennzeichnet, daß an den Endplatten (18) auf deren von dem Lagerhauptkörper (1) abgewandten Stirnflächen (19a) Dichtplatten (29) angebracht sind, welche eine dem Profil der Schiene (2) wenigstens auf einem Teil von dessen Umfang wenigstens annähernd folgende Dichtkante (29a) aufweisen.

17. Wälzlager nach Anspruch 16, dadurch gekennzeichnet, daß die Dichtplatten (29) in Ausnehmungen (28) der Stirnfläche (19a) im wesentlichen bündig mit dieser aufgenommen sind.

18. Wälzlager nach Anspruch 16 oder 17, dadurch gekennzeichnet, daß die Dichtplatten (29) auf den Endplatten (18) durch Schnappverbindungen (30, 39) befestigt sind.

19. Wälzlager nach Anspruch 18, dadurch gekennzeichnet, daß die druckknopfartigen Schnappverbindungen von ineinandergreifenden C-Profilen (30) und Wulstprofilen (39) gebildet sind.

20. Wälzlager nach einem der Ansprüche 1 bis 19, dadurch gekennzeichnet, daß an dem Lagerhauptkörper (1) und gegebenenfalls auch an den Endplatten (18) beidseits der lastübertragenden Wälzkörperreihen (A1, B1) eines Paars von Wälzkörperumläufen (A, B) zu den lastübertragenden Wälzkörperreihen (A1, B1) parallele Dichtleisten (40, 41) angebracht sind, welche an der Schiene (2) anliegen.

21. Wälzlager nach einem der Ansprüche 12 und 13, dadurch gekennzeichnet, daß der U-Steg (1b) des Lagerhauptkörpers (1) eine schienenferne Anlagefläche (1c) zur Anlage an einem Maschinenteil aufweist und daß der U-Steg (1b) mit dem Maschinenteil durch Bolzenverbindungen (15) oder dgl. verbunden ist, welche nahe den U-Schenkeln (1a) angeordnet sind und ggf. durch Bolzenverbindungen (15a), welche annähernd mittig zwischen diesen angeordnet sind.

22. Wälzlager nach einem der ansprüche 1 bis 21, dadurch gekennzeichnet, daß in einem zur Achse der Schiene (2) senkrechten Schnitt betrachtet, die lastaufnehmenden Laufbahnen (A12, B12) der Schiene (2) zu dem Lagerhauptkörper (1) hin divergieren.

23. Wälzlager nach einem der Ansprüche 1 bis 22, dadurch gekennzeichnet, daß die Wälzkörperumläufe Kugelumläufe (A, B) sind, daß die geradlinigen, lastübertragenden Wälzkörperreihen Kugelreihen (A1, B1) sind, daß die rücklaufenden Wälzkörperreihen rücklaufende Kugelreihen (A2, B2) sind, daß die Bogenwälzkörperreihen Bogenkugelreihen (A3, B3) sind und daß die Laufbahnen (A11, B11) des Lagerhauptkörpers (1), die Laufbahnen (A12, B12) der Schiene (2) und die Haltebahnen (A14, B14) der Haltestege (20a, 20b) als Laufrillen bzw. Halterillen ausgebildet sind.

24. Wälzlager nach Anspruch 23, dadurch gekennzeichnet, daß die lastübertragenden Kugelreihen (A1, B1) des Paars von Kugelumläufen (A, B) auf der einen Seite (Umfangsbereich ∞) einer die Achsen (A13, B13) der beiden lastübertragenden Kugelreihen (A1, B1) des Paars (A, B) enthaltenden Ebene (P-P) an den Laufrillen (A11, B11) des Lagerhauptkörpers (1) anliegen und auf der anderen Seite dieser Ebene (P-P) mit einander zugekehrten Umfangsbereichen (β) an den Haltestegen (20a, 20b) anliegen und mit voneinander abgelegenen Umfangsbereichen (γ) an den Laufrillen (A12, B12) der Schiene (2) anliegen.

25. Wälzlager nach Anspruch 23 oder 24, dadurch gekennzeichnet, daß benachbart liegenden Bogenkugelreihen (A3, B3) der Kugelumläufe (A, B) des Paars ein gemeinsames halbzylindrisches Umlenkstück (36) zugeordnet ist, welches von einer gemeinsamen halbzylindrischen Umlenkstückaufnahmerinne (25) aufgenommen ist.

26. Wälzlager nach einem der Ansprüche 23 bis 25, dadurch gekennzeichnet, daß die äußere Umlenkfläche (22a) und die innere Umlenkfläche (36a) einen Umlenkkanal von annähernd konstantem Querschnitt bilden.

27. Wälzlager nach einem der Anprüche 23 bis 26, dadurch gekennzeichnet, daß die Mündung der Querbohrung (37) in die innere Umlenkfläche (36a) gegenüber einer die Kugelmittelpunkte der jeweiligen Bogenkugelreihe enthaltende Ebene versetzt ist.

28. Wälzlager nach einem der Ansprüche 1 bis 22, dadurch gekennzeichnet, daß die Wälzkörperumläufe Rollenumläufe (A, B) sind, daß die lastübertragenden Wälzkörperreihen lastübertragende Rollenreihen (A1, B1) sind, daß die rücklaufenden Wälzkörperreihen rücklaufende Rollenreihen (A2, B2) sind und daß die Bogenwälzkörperreihen Bogenrollenreihen (A3, B3) sind.

29. Wälzlager nach Anspruch 29, dadurch gekennzeichnet, daß paarweise zusammengehörige Rollenumläufe (A, B) in sich schneidenden Ebenen (145, 146) angeordnet sind, wobei die Schnittlinie (E) dieser Ebenen (145, 146) parallel zur Achse der Schiene liegt, daß die jeweils ein und derselben Endplatte (118) zugehörigen Bogenrollenreihen (A3, B3) paarweise zusammengehöriger Rollenumläufe (A, B) in Achsrichtung der Schiene beabstandet sind und sich kreuzen und daß die Rollen der lasttragenden Rollenreihen (A1, B1), die Rollen der rücklaufenden Rollenreihen (A2, B2) und die Rollen der Bogenrollenreihen (A3, B3) in jedem der Rollenumläufe (A, B) zueinander achsparallel sind.

30. Wälzlager nach Anspruch 29, dadurch gekennzeichnet, daß die Umlenkflächen (147, 149; 152, 153) der sich kreuzenden Bogenrollenreihen (B3, A3) an der jeweiligen Endplatte (118) und an in dieser Endplatte (118) versenkten Umlenkstücken (150, 151) ausgebildet sind, nämlich einem äußeren, d. h. dem Lagerhauptkörper ferneren Umlenkstück (150) und einem inneren, d. h. dem Lagerhauptkörper näheren Umlenkstück (151).

31. Wälzlager nach Anspruch 30, dadurch gekennzeichnet, daß von den beiden sich kreuzenden Bogenrollenreihen (B3, A3) die äußere, d. h. dem Lagerhauptkörper fernere Bogenrollenreihe (B3) eine äußere Umlenkfläche (147) besitzt, welche in einer Versenkung (148) der Endplatte (118) ausgebildet ist und eine innere Umlenkfläche (149), welche von dem äußeren Umlenkstück (150) und dem inneren Umlenkstück (151) gebildet ist und daß die innere, d. h. die dem Lagerhauptkörper nähere Bogenrollenreihe (A3) eine äußere Umlenkfläche (152) besitzt, welche teils (152a) von dem äußeren Umlenkstück (150) und teils (152b) von der Versenkung (148) der Endplatte (118) gebildet ist und eine innere Umlenkfläche (153), welche von dem inneren Umlenkstück (151) gebildet ist.

32. Wälzlager nach Anspruch 31, dadurch gekennzeichnet, daß das innere Umlenkstück (151) an seiner dem Lagerhauptkörper zugekehrten Rückenfläche (151b) eine Längsverteilerrinne (126a) für Schmiermittel aufweist, welche an die Schmiermittelversorgungsrinne (126) angeschlossen ist und durch eine das innere Umlenkstück (151) durchsetzende Querbohrung (137) in Verbindung mit der inneren Umlenkfläche (153) der inneren Bogenrollenreihe (A3) steht.

33. Wälzlager nach einem der Ansprüche 29 bis 32, dadurch gekennzeichnet, daß die paarweise zusammengehörigen Rollenumläufe (A, B) in Achsrichtung der Schiene annähernd gleiche Länge besitzen, wobei der eine der Rollenumläufe (A, B) im Bereich der einen Endplatte (118) die innere Bogenrollenreihe (A3) und im Bereich der anderen Endplatte die äußere Bogenrollenreihe bildet.

34. Wälzlager nach Anspruch 33, dadurch gekennzeichnet, daß die beiden Endplatten (118) mit den Umlenkstücken (150, 151) und gegebenenfalls mit den jeweils zugehörigen Haltestegen (120a, 120b) im wesentlichen identische Form besitzen.

35. Wälzlager nach Anspruch 28, dadurch gekennzeichnet, daß zwei paarweise zusammengehörige Rollenumläufe (A, B) in zueinander im wesentlichen parallelen oder in sich spitzwinkelig außerhalb der Rollenumläufe (A, B) schneidenden Ebenen (F, G) mit zur Achsrichtung der Schiene paralleler Schnittlinie angeordnet sind, daß in jedem Rollenumlauf (A, B) die Rollen der lastübertragenden Rollenreihe (A1, B1) einerseits und die Rollen der rücklaufenden Rollenreihe (A2, B2) andererseits mit ihren Rollenachsen in gemeinsamen, gegeneinander geneigten Ebenen angeordnet sind und daß die Rollen der Bogenrollenreihen (A3, B3) mit ihren Achsen auf einer Konusfläche angeordnet sind.

36. Wälzlager nach Anspruch 35, dadurch gekennzeichnet, daß eine Bogenrollenreihe (A3) eine äußere, d. h. dem Lagerhauptkörper fernere Umlenkfläche (255) besitzt, welche durch eine Versenkung (248) in der jeweiligen Endplatte (218) gebildet ist und aus zwei äußeren Teilumlenkflächen (255a, 255b) besteht, nämlich einer ersten äußeren konischen Teilumlenkfläche (255a), welche den Mantelflächen der Rollen anliegt und einer zweiten äußeren konischen Teilumlenkfläche (255b), welche jeweils einer Stirnfläche der Rollen der Bogenrollenreihe (A3) anliegt und daß jede Bogenrollenreihe (A3) ferner eine innere, d. h. dem Lagerhauptkörper nähere Umlenkfläche (257) besitzt, welche an einem in der jeweiligen Endplatte versenkt angeordneten Umlenkstück (256) gebildet ist und aus zwei inneren Teilumlenkflächen (257a, 257b) besteht, nämlich einer ersten inneren konischen Teilumlenkfläche (257a), welche jeweils an den Mantelflächen der Rollen der Bogenrollenreihe (A3) anliegt und einer zweiten inneren konischen Teilumlenkfläche (257b), welche an den anderen Stirnflächen der Rollen der Bogenrollenreihe (A3) anliegt.

37. Wälzlager nach Anspruch 36, dadurch gekennzeichnet, daß das Umlenkstück (256) eine zu der Anlagefläche der jeweiligen Endplatte (218) bündige Rückenfläche (258) aufweist.

38. Wälzlager nach Anspruch 37, dadurch gekennzeichnet, daß in der Rückenfläche (258) eine Längsverteilerrinne (226a) ausgebildet ist, welche an die Schmiermittelversorgungsrinne (226) angeschlossen ist und durch eine das Umlenkstück (256) durchsetzende Querbohrung (237) mit der inneren Umlenkfläche (257) in Verbindung steht.

39. Wälzlager nach einem der Ansprüche 36 bis 38, dadurch gekennzeichnet, daß ein gemeinsames Umlenkstück (256) den beiden paarweise zusammengehörigen Rollenumläufen (A, B) zugeordnet ist.

40. Wälzlager nach einem der Ansprüche 28 bis 39, dadurch gekennzeichnet, daß die Rollen als Zylinderrollen ausgebildet sind.

41. Wälzlager nach einem der Ansprüche 28 bis 39, dadurch gekennzeichnet, daß die Rollen als Tonnenrollen ausgebildet sind.

42. Wälzlager nach einem der Ansprüche 28 bis 39, dadurch gekennzeichnet, daß die Rollen als zylindrische Nadeln ausgebildet sind.

43. Wälzlager nach einem der Ansprüche 28 bis 42, dadurch gekennzeichnet, daß die Rollenumläufe von lose aufeinanderfolgenden Rollen gebildet sind, d. h. die Rollen untereinander nicht verbunden sind.

44. Wälzlager nach einem der Ansprüche 28 bis 43, dadurch gekennzeichnet, daß zwischen aufeinanderfolgenden Rollen lose Abstandsstücke angeordnet sind.

45. Wälzlager nach Anspruch 44, dadurch gekennzeichnet, daß die Abstandsstücke (270) in einer Ansicht senkrecht zu einer durch die Achsen zweier aufeinanderfolgender Rollen bestimmten Ebene annähernd doppeltrapezförmigen Umriß besitzen und in ihren den Rollen zugekehrten Seitenflächen mit Rillen (271) ausgeführt sind, welche die Rollen aufnehmen, und daß die Abstandsstücke (270) in ihrer Erstreckung parallel zu den Rollenachsen annähernd der Rollenlänge entsprechen.

46. Wälzlager nach eimen der Ansprüche 28 bis 45, dadurch gekennzeichnet, daß die Bogenrollenreihen (A3, B3) durch Umlenkkanäle im wesentlichen konstanten Querschnitts geführt sind.

## Claims

1. Rolling bearing for linear movements, comprising a main bearing body (1) guided on a rail (2) for axial displacement in the axial direction thereof, having two end faces (1d) substantially normal to the axis and spaced in the axial direction of the rail and at least one pair of rolling body circuits (A, B), where each rolling body circuit (A, B) of the pair comprises a rectilinear, load-transmitting rolling body row (A1, B1) in engagement with a paraxial, load-receiving track (A11, B11) of the main bearing body (1) and with a paraxial, load-receiving track (A12, B12) of the rail (2), a returning rolling body row (A2, B2) and two curved rolling body rows (A3, B3), where further the returning rolling body rows (A2, B2) are guided by approximately paraxial return passages (A21, B21) of the main bearing body (1), where further on the end faces (1d) there are fitted end plates (18) in which deflector faces (22a, 36a) for the curved rolling body rows (A3, B3) are provided, where further the end plates (18) are made with paraxial retaining flanges (20a, 20b) lying in alignment with one another and abutting together at their ends, where these retaining flanges (20a, 20b) hold the load-transmitting rolling body rows (A1, B1) in the position of engagement with the load-receiving tracks (A11, B11) of the main bearing body (1) and where the two load-transmitting rolling body rows (A1, B1) of the two rolling body circuits (A, B) of the pair are held by a single group, common to them, of two mutually aligned retaining webs (20a, 20b), each pertaining to an end plate (18) and arranged between the load-transmitting rolling body rows, in the position of engagement with the respective track (A11, B11) of the main bearing body (1).

2. Rolling body according to Claim 1, characterised in that the retaining webs (20a, 20b) comprise retaining tracks (A14, B14) for the load-transmitting rolling body rows (A1, B1).

3. Rolling bearing according to any one of Claims 1 and 2, characterised in that the retaining webs (20a, 20b), are supported in the main bearing body (1) by a tongue-and-groove joint (32a, 32b), especially with dovetail section or the like.

4. Rolling bearing according to any one of Claims 1 to 3, characterised in that the mutually facing ends of mutually aligned retaining webs (20a, 20b) are connected with one another by push-in connections (33a, 33b) or the like.

5. Rolling bearing according to any one of Claims 1 to 4, characterised in that a curved rolling body row (A3, B3) is guided by an outer deflector face (22a), that is one more remote from the main bearing body (1), and countersunk in an abutment face (19) of the end plate (18), and an inner deflector face (36a), that is one closer to the main bearing body (1), the inner deflector face (36a) being formed on at least one deflector piece (36) which is accommodated in a deflector piece receiver (25) in the abutment face (19) of the end plate (18).

6. Rolling bearing according to Claim 5, characterised in that the curved rolling body row (A3, B3) approximately follows a semi-circle at least over a part of its length.

7. Rolling bearing according to any one of Claims 5 and 6, characterised in that in the abutment face (19) of at least one end plate (18) a lubricant supply channel (26) is provided which is connected to a lubricant supply (27) of the end plate (18), leads to the deflector piece receiver (25) and through a lubricant distribution system (26a, 37) within the deflector piece receiver (25) supplies at least one rolling body circuit (A, B) with lubricant.

8. Rolling bearing according to Claim 7, characterised in that the lubricant supply (27) is fitted on an end face (19a) of the end plate (18), parallel to the abutment face (19) of the end plate (18), namely in such a way that a lubricant apparatus applied to the lubricant supply (27) exerts a pressure upon the end plate (18) perpendicularly of the abutment face (19).

9. Rolling bearing according to Claim 7 or 8, characterised in that the lubricant distribution system (26a, 37) comprises a longitudinal distributor channel (26a) in a rear face (36b), apart from the inner deflector face, of the deflector piece (36) and a transverse bore (37) which connects this longitudinal distributor channel (26a) with the inner deflector face (36a) of the respective curved rolling body row (A3, B3).

10. Rolling bearing according to Claim 9, characterised in that the opening of the transverse bore (37) into the inner deflector face (36a) takes place at a position subordinate for the guidance of the rolling bodies.

11. Rolling bearing according to any one of Claims 1 to 10, characterised in that the main bearing body (1) comprises two mutually opposite pairs (A, B; C, D) of rolling body circuits (A, B, C, D) which receive the rail (2) between them.

12. Rolling bearing according to Claim 11, characterised in that the main bearing body (1) grasps in U-form around the rail (2), while the rolling body circuits (A, B, C, D) are accommodated in the U-legs (1a) of the main bearing body (1).

13. Rolling bearing according to Claim 12, characterised in that the rolling body circuits (A, B, C, D) are arranged in the U-legs (1a) of the main bearing body (1) parallel with the U-crosspiece (1b) of the main bearing body (1).

14. Rolling bearing according to any one of Claims 11 to 13, characterised in that the opposite pairs (A, B; C, D) of rolling body circuits (A, B, C, D) are accommodated in parts (40a, 40b) of the main bearing body (1) and their mutual spacing is variable.

15. Rolling body according to any one of Claims 11 to 14, characterised in that the rail (2) is composed of two profiled parts (42a, 42b) with load-receiving tracks and at least one intermediate piece (42c).

16. Rolling bearing according to any one of Claims 1 to 15, characterised in that on the end plates (18), on their end faces (19a) remote from the main bearing body (1), there are fitted sealing plates (29) which possess a sealing edge (29a) at least approximately following the profile of the rail (2) at least over a part of its circumference.

17. Rolling bearing according to Claim 16, characterised in that the sealing plates (29) are received in apertures (28) of the end face (19a) substantially flush with the latter.

18. Rolling bearing according to Claim 16 or 17, characterised in that the sealing plates (29) are secured on the end plates (18) by snap connections (30, 39).

19. Rolling bearing according to Claim 18, characterised in that the snap connections of press-stud type are formed by interengaging C-sections (30) and bead sections (39).

20. Rolling bearing according to any one of Claims 1 to 19, characterised in that on the main bearing body (1) and possibly also on the end plates (18) on both sides of the load-transmitting rolling body rows (A1, B1) of a pair of rolling body circuits (A, B) there are fitted sealing strips (40, 41) parallel to the load-transmitting rolling body rows (A1, B1), which strips rest on the rail (2).

21. Rolling bearing according to any one of Claims 12 and 13, characterised in that the U-crosspiece (1b) of the main bearing body (1) comprises a rail-remote abutment face (1c) for abutment on a machine part and in that the U-crosspiece (1b) is connected with the machine part by bolt connections (15) or the like, which are arranged close to the U-legs (1a) and possibly by bolt connections (15a) which are arranged approximately centrally between these.

22. Rolling bearing according to any one of Claims 1 to 21, characterised in that, considered in a section perpendicular to the axis of the rail (2), the load-receiving tracks (A12, B12) of the rail (2) diverge to the main bearing body (1).

23. Rolling bearing according to any one of Claims 1 to 22, characterised in that the rolling body circuits are ball circuits (A, B), in that the rectilinear, load-transmitting rolling body rows are ball rows (A1, B1), in that the returning rolling body rows are returning ball rows (A2, B2), in that the curved rolling body rows are curved ball rows (A3, B3) and in that the tracks (A11, B11) of the main bearing body (1), the tracks (A12, B12) of the rail (2) and the retaining tracks (A14, B14) of the retaining webs (20a, 20b) are formed as track channels or retaining channels.

24. Rolling bearing according to Claim 23, characterised in that the load-transmitting ball rows (A1, B1) of the pair of ball circuits (A, B) on the one side (circumferential region $\propto$) of a plane (P-P) containing the axes (A13, B13) of the two load-transmitting ball rows (A1, B1) of the pair (A, B) rest against the channels (A11, B11) of the main bearing body (1) and on the other side of this plane (P-P) rest with mutually facing circumferential zones ($\beta$) on the retaining webs (20a, 20b) and rest with mutually remote circumferential zones ($\gamma$) on the channels (A12, B12) of the rail (2).

25. Rolling bearing according to Claim 23 or 24, characterised in that a common semi-cylindrical deflector piece (36) is allocated to the adjacently lying curved ball rows (A3, B3) of the ball circuits (A, B) of the pair, which deflector piece is received by a common semy-cylindrical deflector piece receiver channel (25).

26. Rolling bearing according to any one of Claims 23 to 25, characterised in that the outer deflector face (22a) and the inner deflector face (36a) form a deflector passage of approximately constant cross-section.

27. Rolling bearing according to any one of Claims 23 to 26, characterised in that the opening of the transverse bore (37) into the inner deflector face (36a) is offset in relation to a plane containing the ball centre points of the respective curved ball row.

28. Rolling bearing according to any one of Claims 1 to 22, characterised in that the rolling body circuits are roller circuits (A, B), in that the load-transmitting rolling body rows are load-transmitting roller rows (A1, B1), in that the returning rolling body rows are returning roller rows (A2, B2) and in that the curved rolling body rows are curved roller rows (A3, B3).

29. Rolling bearing according to Claim 28, characterised in that roller circuits (A, B) pertaining together by pairs are arranged in intersecting planes (145, 146), the line (E) of intersection of these planes (145, 146) lying parallel to the axis of the rail, in that the curved roller rows (A3, B3), pertaining in each case to one and the same end plate (118), of roller circuits (A, B) belonging together by pairs are spaced in the axial direction of the rail and cross, and in that the rollers of the load-carrying roller rows (A1, B1), the rollers of the returning roller rows (A2, B2) and the rollers of the curved roller rows (A3, B3) in each of the roller circuits (A, B) are axially parallel with one another.

30. Rolling bearing according to Claim 29, characterised in that the deflector faces (147, 149; 152, 153) of the mutually crossing curved roller rows (B3, A3) are formed on the respective end plate (118) and on deflector pieces (150, 151) countersunk in this end plate (118), namely a deflector piece (150) which is outer, that is more remote from the main bearing body, and an inner deflector piece (151), that is one closer to the main bearing body.

31. Rolling bearing according to Claim 30, characterised in that of the two mutually crossing curved roller rows (B3, A3) the outer curved roller row (B3), that is that more remote from the main bearing body, possesses an outer deflector face (147) which is formed in a countersinking (148) of the end plate (118) and an inner deflector face (149) which is formed by the outer deflector piece (150) and the inner deflector piece (151), and in that the inner curved roller row (A3), that is that nearer to the main bearing body, possesses an outer deflector face (152) which is formed partly (152a) by the outer deflector piece (150) and partly (152b) by the countersinking (148) of the end plate (118) and an inner deflector face (153) which is formed by the inner deflector piece (151).

32. Rolling bearing according to Claim 31, characterised in that the inner deflector piece (151) comprises on its rear face (151b) facing the main bearing body a longitudinal distributor channel (126a) for lubricant, which is connected to the lubricant supply channel (126) and is in communication, through a transverse bore (137) penetrating the inner deflector piece (151), with the inner deflector face (153) of the inner curved roller row (A3).

33. Rolling bearing according to any one of Claims 29 to 32, characterised in that the roller circuits (A, B) belonging together by pairs possess approximately equal lengths in the axial direction of the rail, while the one of the roller circuits (A, B) in the region of the one end plate (118) forms the inner curved roller row (A3) and the one in the region of the other end plate forms the outer curved roller row.

34. Rolling bearing according to Claim 33, characterised in that the two end plates (118) with the deflector pieces (150, 151) and possibly with the retaining webs (120a, 120b) pertaining together in each case possess substantially identical form.

35. Rolling bearing according to Claim 28, characterised in that two roller circuits (A, B) pertaining together by pairs are arranged in planes (F, G) substantially parallel to one another or intersecting at an acute angle outside the roller circuits (A, B), with section line parallel to the axial direction of the rail, in that in every roller circuit (A, B) the rollers of the load-transmitting roller row (A1, B1) for the one part and the rollers of the returning roller row (A2, B2) for the other part are arranged with their roller axes in common planes inclined in relation to one another, and in that the rollers of the curved roller rows (A3, B3) are arranged with their axes on a cone surface.

36. Rolling bearing according to Claim 35, characterised in that a curved roller row (A3) possesses an outer deflector face (255), that is one further from the main bearing body, which is formed by a countersinking (248) in the respective end plate (218) and consists of two outer part deflector faces (255a, 255b), namely a first outer conical part deflector face (255a) which rests on the peripheral surfaces of the rollers and a second outer conical part deflector face (255b) which in each case rests on an end face of the rollers of the curved roller row (A3) and in that each curved roller row (A3) further possesses an inner deflector face (257), that is one nearer to the main bearing body, which is formed on a deflector piece (256) arranged countersunk in the respective end plate and consists of two inner part deflector faces (257a, 257b), namely a first inner conical part deflector face (257a) which rests in each case on the circumferential surfaces of the rollers of the curved roller row (A3) and a second inner conical part deflector face (257b) which rests on the other end faces of the rollers of the curved roller row (A3).

37. Rolling bearing according to Claim 36, characterised in that the deflector piece (256) comprises a rear face (258) flush with the abutment face of the respective end plate (218).

38. Rolling bearing according to Claim 37, characterised in that in the rear face (258) a longitudinal distributor channel (226a) is formed which is connected to the lubricant supply channel (226) and is in communication with the inner deflector face (257) through a transverse bore (237) penetrating the deflector piece (256).

39. Rolling bearing according to any one of Claims 36 to 38, characterised in that a common deflector piece (256) is allocated to the two roller circuits (A, B) which pertain together as a pair.

40. Rolling bearing according to any one of Claims 28 to 39, characterised in that the rollers are formed as cylindrical rollers.

41. Rolling bearing according to any one of Claims 28 to 39, characterised in that the rollers are formed as barrel rollers.

42. Rolling bearing according to any one of Claims 28 to 39, characterised in that the roller are formed as cylindrical needles.

43. Rolling bearing according to any one of Claims 28 to 42, characterised in that the roller circuits are formed by rollers loosely following one another, that is the rollers are not interconnected.

44. Rolling bearing according to any one of Claims 28 to 43, characterised in that loose distance pieces are arranged between successive rollers.

45. Rolling bearing according to Claim 44, characterised in that the distance pieces (270) possess an approximately double-trapezium-shaped outline, in a view perpendicular to a plane determined by the axes of two successive rollers, and are formed, in their side faces facing the rollers, with channels (271) which receive the rollers, and in that the distance pieces (270) in their extent parallel to the roller axes correspond approximately to the roller length.

46. Rolling bearing according to any one of Claims 28 to 45, characterised in that the curved roller rows (A3, B3) are guided by deflector passages of substantially constant cross-section.

## Revendications

1. Palier à roulement pour mouvements linéaires comprenant un corps principal (1) de palier, guidé en coulissement sur un rail (2) dans le sens de l'axe de ce dernier, et possédant deux faces terminales (1d) sensiblement perpendiculaires à l'axe et espacées dans le sens de l'axe du rail (2), ainsi qu'au moins une paire de circulations (A, B) à éléments roulants, chacune des circulations (A, B) à éléments roulants de cette paire présentant une rangée d'élément roulants rectiligne (A1, B1) transmettant la charge et engrenant sur une piste de roulement (A11, B11) du corps principal (1) du palier, parallèle à l'axe et recevant la charge, et sur une piste de roulement (A12, B12) du rail (2), parallèle à l'axe et recevant la charge, ainsi qu'une rangée d'éléments roulants de retour (A2, B2), et deux rangées d'éléments roulants courbes (A3, B3), les rangées d'éléments roulants de retour (A2, B2) étant par ailleurs guidées dans des couloirs de retour (A21, B21) du corps principal (1) du palier, approximativement parallèles à l'axe, sur les faces terminales (1d) étant par ailleurs disposées des plaques terminales (18) dans lesquelles sont prévues des surfaces de renvoi (22a, 36a) destinées aux rangées d'éléments roulants courbes (A3, B3), les plaques terminales (18) étant par ailleurs conformées avec des traverses de maintien (20a, 20b) parallèles à l'axe, disposées en alignement l'une par rapport à l'autre et dont les extrémités aboutent, ces traverses de maintien (20a, 20b) maintenant les rangées d'éléments roulants (A1, B1) transmettant la charge, en position d'engrènement par rapport aux pistes de roulement (A11, B11) du corps principal (1) du palier, recevant la charge, et les deux rangées d'éléments roulants (A1, B1) transmettant la charge, de chacune des deux circulations à éléments roulants (A, B) de la paire de roulements, étant maintenues en position d'engrènement par rapport à la piste de roulement (A11, B11) respective du corps principal (1) du palier, par un même groupe commun de deux traverses de maintien (20a, 20b) disposées en alignement entre elles et associées chacune à une plaque terminale (18) et disposées entre les rangées d'éléments roulants transmettant la charge.

2. Palier à roulement selon la revendication 1, caractérisé en ce que les traverses de maintien (20a, 20b) présentent des pistes de maintien (A14, B14) destinées aux rangées d'éléments roulants (A1, B1) transmettant la charge.

3. Palier à roulement selon la revendication 1 ou 2, caractérisé en ce que les traverses de maintien (20a, 20b) s'appuient dans le corps principal (1) du palier au moyen d'un assemblage à languette et rainure (32a, 32b) présentant, notamment, un profil en queue d'aronde ou similaire.

4. Palier à roulement selon l'une des revendications 1 à 3, caractérisé en ce que les extrémités tournées l'une vers l'autre, de traverses de maintien (20a, 20b) disposées en alignement entre elles, sont reliées entre elles par des moyens d'assemblage enfichables (33a, 33b) ou similaires.

5. Palier à roulement selon l'une des revendications 1 à 4, caractérisé en ce qu'une rangée d'éléments roulants courbe (A3, B3) est guidée au moyen d'une surface de renvoi (22a) extérieure, c'est-à-dire plus éloignée par rapport au corps principal (1) du palier, noyée dans une surface d'appui (19) de la plaque terminale (19), et d'une surface de renvoi (36a) intérieure, c'est-à-dire plus rapprochée par rapport au corps principal (1) du palier, la surface de renvoi intérieure étant formée sur au moins un élément de renvoi (36) logé dans un logement (25) d'élément de renvoi, situé dans la surface d'appui (19).

6. Palier à roulement selon la revendication 5, caractérisé en ce que la rangée d'éléments roulants courbe (A3, B3) suit approximativement le tracé d'un demi-cercle sur au moins une partie de sa longueur.

7. Palier à roulement selon la revendication 5 ou 6, caractérisé en ce qu'une rainure d'alimentation de lubrifiant (26) est prévue dans la surface d'appui (19) d'au moins une plaque terminale (18), et raccordée à une amenée de lubrifiant (27) de la plaque terminale (18), et qui mène vers le logement (25) d'élément de renvoi, alimentant en lubrifiant au moins une circulation (A, B) à éléments roulants, à travers un système de distribution de lubrifiant (26a, 37) situé à l'intérieur du logement (25) d'élément de renvoi.

8. Palier à roulement selon la revendication 7, caractérisé en ce que l'amenée de lubrifiant (27) est disposée sur une face en bout (19a) de la plaque terminale (18), parallèle à la surface d'appui (19) de la plaque terminale (18), de façon à ce qu'un appareil de lubrification appliqué sur l'amenée de lubrifiant (27) exerce une pression sur la plaque terminale (18), perpendiculairement à la surface d'appui (19).

9. Palier à roulement selon la revendication 7 ou 8, caractérisé en ce que le système de distribution de lubrifiant (26a, 37) comporte une rainure de distribution longitudinale (26a) située dans une face arrière (36b) de l'élément de renvoi (36) opposée à la surface de renvoi intérieure, et un trou percé transversal (37) reliant ladite rainure de distribution longitudinale (26a) à la surface de renvoi intérieure (36a) de la rangée d'éléments roulants courbe (A3, B3) respective.

10. Palier à roulement selon la revendication 9, caractérisé en ce que le trou percé transversal (37) débouche dans la surface de renvoi intérieure (36a), dans un point secondaire pour le guidage des éléments roulants.

11. Palier à roulement selon l'une des revendications 1 à 10, caractérisé en ce que le corps principal (1) du roulement comporte deux paires de circulations (A, B; C, D) à éléments roulants, opposées l'une à l'autre et recevant entre elles le rail (2).

12. Palier à roulement selon la revendication 11, caractérisé en ce que le corps principal (1) du palier enserre le rail (2) en décrivant un profil en forme de «U», les circulations (A, B; C, D) à éléments roulants étant logées dans les branches (1a) en forme de «U» du corps principal (1) du palier.

13. Palier à roulement selon la revendication 12, caractérisé en ce que les circulations (A, B; C, D) à éléments roulants sont disposées parallèlement par rapport à l'entretoise en forme de «U» (1b) du corps principal (1) du palier, dans les branches (1a) en forme de «U» du corps principal (1) du palier.

14. Palier à roulement selon l'une des revendications 11 à 13, caractérisé en ce que les paires (A, B; C, D) de circulation (A, B, C, D) à éléments roulants, opposées l'une par rapport à l'autre, sont logées dans des tronçons (40a, 40b) du corps principal (1) du palier, à distance variable l'une par rapport à l'autre.

15. Palier à roulement selon l'une des revendications 11 à 14, caractérisé en ce que le rail de roulement (2) est composé de deux profilés (42a, 42b) comportant des pistes de roulement recevant la charge, et au moins une entretoise (42c).

16. Palier à roulement selon l'une des revendications 1 à 15, caractérisé en ce que sur les faces en bout (19a) opposées au corps principal (1) du palier des plaques terminales (18), sont disposées des plaques d'étanchéité (29) présentant un bord d'étanchéité (29a) suivant au moins approximativement le profil du rail (2) sur au moins une partie de la périphérie dudit profil.

17. Palier à roulement selon la revendication 16, caractérisé en ce que les plaques d'étanchéité (29) sont logées sensiblement à fleur avec la face en bout (19a), dans des évidements (28) de la face en bout (19a).

18. Palier à roulement selon la revendications 16 ou 17, caractérisé en ce que les plaques d'étanchéité (29) sont fixées sur les plaques terminales (18) au moyen de liens encliquetables (30, 39).

19. Palier à roulement selon la revendication 18, caractérisé en ce que les liens encliquetables, du type bouton à pression, sont constitués de profils en forme de «C» (30) et de profils en forme de bourrelets (39).

20. Palier à roulement selon l'une des revendications 1 à 19, caractérisé en ce que, sur le corps principal (1) du palier et, le cas échéant, également sur les plaques terminales (18), de part et d'autre des rangées d'éléments roulants (A1, B1) transmettant la charge, d'une paire de circulations (A, B) à éléments roulants, sont disposées des baguettes d'étanchéité (40, 41) parallèles aux rangées d'éléments roulants (A1, B1) et s'appuyant sur le rail (2).

21. Palier à roulement selon la revendication 12 ou 13, caractérisé en ce que la traverse en «U» (1b) du corps principal (1) du palier présente une face d'appui (1c) éloignée du rail et destinée à s'appuyer sur une partie d'une machine, et en ce que la traverse en «U» (1b) est reliée à la partie de la machine au moyen de boulonnages (15) ou similaires, disposés à proximité des branches en «U» (1b), et, le cas échéant, par des boulonnages (15a) disposés de façon approximativement centrée entre elles.

22. Palier à roulement selon l'une des revendications 1 à 21, caractérisé en ce que, considérées suivant une coupe verticale par rapport à l'axe du rail (2), les pistes de roulement (A12, B12) du rail (2), recevant la charge, divergent en direction du corps principal (1) du palier.

23. Palier à roulement selon l'une des revendications 1 à 22, caractérisé en ce que les circulations à éléments roulants sont des circulations à billes (A, B), en ce que les rangées d'éléments roulants linéaires transmettant la charge sont des rangées de billes (A1, B1), en ce que les rangées d'éléments roulants de retour sont des rangées de billes de retour (A2, B2), en ce que les rangées d'éléments roulants courbes sont des rangées de billes courbes (A3, B3), et en ce que les pistes de roulement (A11, B11) du corps principal (1) du palier, les pistes de roulement (A12, B12) du rail (2) et les pistes de maintien (A14, B14) des traverses de maintien (20a, 20b) sont conformées en gorges de roulement ou en gorges de maintien, selon le cas.

24. Palier à roulement selon la revendication 23, caractérisé en ce que les rangées de billes (A1, A2) transmettant la charge de la paire de circulation à billes (A, B) s'appuient d'un côté (zone périphérique ∝) d'un plan (P-P) renfermant les axes (A13, B13) des deux rangées de billes (A1, B1) transmettant la charge de la paire (A, B), sur les gorges de roulement (A11, B11) du corps principal (1) du palier, et de l'autre côté de ce plan (P-P) par des zones périphériques (β) tournées l'une vers l'autre, sur les traverses de maintien (20a, 20b), et s'appuient sur les gorges de roulement (A12, B12) par des zones périphériques (γ) opposées l'une à l'autre, sur les gorges de roulement (A12, B12) du rail (2).

25. Palier à roulement selon la revendication 23 ou 24, caractérisé en ce qu'à des rangées de billes courbes (A3, B3), voisines entre elles, des circulations à billes (A, B) de la paire, est associée un élément de renvoi (36) commun en forme de demi-cylindre, logé dans une rainure semi-cylindrique (25) destinée à recevoir l'élément de renvoi.

26. Palier à roulement selon l'une des revendications 23 à 25, caractérisé en ce que la surface de renvoi extérieure (22a) et la surface de renvoi intérieure (36) forment un couloir de renvoi de section approximativement constante.

27. Palier à roulement selon l'une des revendications 23 à 26, caractérisé en ce que l'orifice du trou percé transversal (37) est décalé à l'intérieur de la surface de renvoi intérieure (36a) par rapport à un plan contenant les centres des billes de la rangée de billes correspondante.

28. Palier à roulement selon l'une des revendications 1 à 22, caractérisé en ce que les circulations à éléments roulants sont des circulations à rouleaux (A, B), en ce que les rangées d'éléments roulants transmettant la charge sont des rangées de rouleaux (A1, B1) transmettant la charge, en ce que les rangées d'éléments de retour sont des rangées de rouleaux de retour (A2, B2), et en ce que les rangées d'éléments roulants courbes sont des rangées de rouleaux courbes (A3, B3).

29. Palier à roulement selon la revendication 28, caractérisé en ce que des circulations à rouleaux (A, B) appariées sont disposées dans des plans (145, 146) se coupant, la ligne d'intersection (E) de ces plans (145, 146) étant parallèle à l'axe du rail, en ce que les différents ensembles de rangées de rouleaux courbes (A3, B3) de circulations de rouleaux (A3, B3) appariées, associés chacun à une même plaque terminale (118), sont espacés dans le sens de l'axe du rail et s'entrecroisent, et en ce que les rouleaux des rangées de rouleaux (A1, B1) supportant la charge, les rouleaux des rangées de rouleaux de retour (A2, B2), et les rouleaux des rangées de rouleaux courbes (A3, B3) sont parrallèles à l'axe les unes par rapport aux autres, à l'intérieur de chaque circulation à rouleaux (A, B).

30. Palier à roulement selon la revendication 29, caractérisé en ce que les surfaces de renvoi (147, 149; 152, 153) des rangées de rouleaux courbes (B3, A3) s'entrecroisant, sont formées sur chaque plaque terminale (118) respective, et sur des éléments de renvoi (150, 151) noyés dans ladite plaque terminale (118), plus précisément sur un élément de renvoi (150) extérieur, c'est-à-dire plus éloigné par rapport au corps principal du palier, et sur un élément de renvoi (151) intérieur, c'est-à-dire plus rapproché par rapport au corps principal du palier.

31. Palier à roulement selon la revendication 30, caractérisé en ce que parmi les deux rangées de rouleaux courbes (B3, A3) s'entrecroisant, la rangée extérieure, c'est-à-dire la rangée extérieure, c'est-à-dire la rangée à rouleaux courbe (B3) plus éloignée par rapport au corps principal du palier, possède une surface de renvoi extérieure (147) formée dans un renfoncement (148) de la plaque terminale (118), ainsi qu'une surface de renvoi intérieure (149) formée par l'élément de renvoi extérieur (150) et l'élément de renvoi intérieur (151), et en ce que la rangée intérieure, c'est-à-dire la rangée à rouleaux courbe (A3) plus rapprochée par rapport au corps principal du palier, possède une surface de renvoi extérieure (152), formée en partie (152a) par l'élément de renvoi extérieur (150), et en partie (152b) par le renfoncement (148) de la plaque terminale (118), ainsi qu'une surface de renvoi intérieure (153) formée par l'élément de renvoi intérieur (151).

32. Palier à roulement selon la revendication 31, caractérisé en ce que l'élément de renvoi intérieur (151) présente sur sa face arrière (151b) tournée vers le corps principal du palier, une rainure de distribution longitudinale (126a) de lubrifiants, raccordée à la rainure d'alimentation en lubrifiant (126), et reliée à la surface de renvoi intérieure (153) de la rangée de rouleaux courbe intérieure (A3), par l'intermédiaire d'un trou percé transversal (137) traversant l'élément de renvoi intérieur (151).

33. Palier à roulement selon l'une des revendications 29 à 32, caractérisé en ce que les circulations à rouleaux (A, B) appariées possèdent une longueur approximativement identique dans les sens de l'axe du rail, une des circulations à rouleaux (A, B) constituant la rangée de rouleaux courbes intérieure (A3) dans la région d'une plaque terminale (118), et la rangée de rouleaux courbe extérieure dans la région de l'autre plaque terminale.

34. Palier à roulement selon la revendication 33, caractérisé en ce que les deux plaques terminales (118) avec les éléments de renvoi (150, 151) et, le cas échéant, avec les traverses de maintien (120a, 120b) correspondantes sont substantiellement de forme identique.

35. Palier à roulement selon la revendication 28, caractérisé en ce que deux circulations à rouleaux (A, B) appariées sont disposées dans des plans (F, G) sensiblement parallèles entre eux, ou se croisant suivant un angle aigu à l'extérieur des circulations à rouleaux (A, B) suivant une ligne d'intersection parallèle au sens de l'axe du rail, en ce que, dans chaque circulation à rouleaux (A, B), les rouleaux de la rangée de rouleaux (A1, B1), transmettant la charge d'une part, et les rouleaux de la rangée de rouleaux de retour (A2, B2) d'autre part, sont disposés par leurs axes dans des plans communs inclinés les uns par rapport aux autres, et en ce que les rouleaux des rangées de rouleaux courbes (A3, B3) sont disposés par leurs axes suivant une surface conique.

36. Palier à roulement selon la revendication 35, caractérisé en ce qu'une rangée de rouleaux courbe (A3) possède une surface de renvoi (255) extérieure, c'est-à-dire plus éloignée par rapport au corps principal du palier, formée par un renfoncement (248) dans la plaque terminale (218) respective, et constituée de deux surfaces partielles de renvoi extérieures (255a, 255b), c'est-à-dire d'une première surface partielle de renvoi conique extérieure (255a) s'appuyant sur les génératrices des rouleaux, et d'une deuxième surface partielle de renvoi conique extérieure (255b) s'appuyant respectivement sur une face en bout des rouleaux de la rangée de rouleaux courbe (A3), et en ce que chaque rangée de rouleaux courbe (A3) possède en outre une surface de renvoi (257) intérieure, c'est-à-dire plus rapprochée par rapport au corps principal du palier, formée par un élément de renvoi (256) disposé noyé dans la plaque terminale respective, et constituée de deux surfaces partielles de renvoi intérieures (257a, 257b), c'est-à-dire d'une première surface partielle de renvoi conique intérieure (257a) s'appuyant respectivement sur les génératrices des rouleaux de la rangée de rouleaux courbe (A3), et d'une deuxième surface partielle de renvoi conique intérieure (257b) s'appuyant sur les autres faces en bout des rouleaux de la rangée de rouleaux courbe (A3).

37. Palier à roulement selon la revendication 36, caractérisé en ce que l'élément de renvoi (256) présente une face arrière (218) affleurant la surface d'appui de la plaque terminale (218) respective.

38. Palier à roulement selon la revendication 37, caractérisé en ce qu'une rainure de distribution longitudinale (226a) est formée dans la surface arrière (258), raccordée à la rainure d'alimentation de lubrifiant (226), et reliée à la surface de renvoi intérieure (257) par l'intermédiaire d'un trou percé transversal (237) traversant l'élément de renvoi (256).

39. Palier à roulement selon l'une des revendications 36 à 38, caractérisé en ce qu'un seul élément de renvoi (256) commun est associé aux deux circulations à rouleaux (A, B) appariées.

40. Palier à roulement selon l'une des revendications 28 à 39, caractérisé en ce que les rouleaux sont conformés en rouleaux cylindriques.

41. Palier à roulement selon l'une des revendications 28 à 39, caractérisé en ce que les rouleaux sont conformés en galets en forme de tonneaux.

42. Palier à roulement selon l'une des revendications 28 à 39, caractérisé en ce que les rouleaux sont conformés en aiguilles cylindriques.

43. Palier à roulement selon l'une des revendications 28 à 42, caractérisé en ce que les circulations à rouleaux sont constituées de rouleaux mobiles se succédant librement, c'est-à-dire que les rouleaux ne sont pas reliés entre eux.

44. Palier à roulement selon l'une des revendications 28 à 43, caractérisé en ce que des écarteurs mobiles sont disposés entre des rouleaux successifs.

45. Palier à roulement selon la revendication 44, caractérisé en ce que les écarteurs (270), considérés suivant une vue perpendiculaire à un plan défini par les axes de deux rouleaux successifs, possèdent un contour approximativement en double trapèze, et sont conformés, sur leurs faces latérales tournées vers les rouleaux, avec des gorges (271) recevant les rouleaux, et en ce que dans leur extension parallèle aux axes des rouleaux, les écarteurs (270) correspondent approximativement à la longueur des rouleaux.

46. Palier à roulement selon l'une des revendications 28 à 45, caractérisé en ce que les rangées de rouleaux courbes (A3, B3) sont guidées au moyen de couloirs de renvoi de section substantiellement constante.

Fig.1

EP 0 211 243 B1

Fig. 2a

Fig. 2b

EP 0 211 243 B1

Fig.2c

Fig.2d

EP 0 211 243 B1

Fig.2e

Fig.9a

Fig.9

Fig. 3

Fig. 4

Fig. 5

Fig.6

A14

33a

32b

20b

B14

Fig.7

34

30

34

19a

28

18

35

18

27

26

19

Fig.8

28

20a

19a

Fig.14

29

29

1

1

S

40a

18

2

42a

42c

42b

2

18

40b

S

Fig. 10

Fig. 10a

Fig. 11

Fig. 12

Fig. 13

Fig. 22

Fig. 16

Fig. 15

33

Fig. 17

Fig. 18

Fig. 19

Fig. 20

Fig. 21

Fig. 26

Fig. 27

Fig. 25

Fig. 24

Fig. 23

$Fig$ _ 28

270

271

+

$Fig$ _ 29

270

271    271